# EUROPÄISCHE PATENTSCHRIFT

(11) **EP 3 693 129 B1**
(45) Veröffentlichungstag und Bekanntmachung des Hinweises auf die Patenterteilung: **30.08.2023**
(21) Anmeldenummer: 19185369.6
(22) Anmeldetag: 10.07.2019
(51) Int. Cl.: B23C 9/00

(54) **WERKZEUGKOPFEINHEIT FÜR SPANABHEBENDE BEARBEITUNG VON WERKSTÜCKEN MIT DREI SIMULTANFÄHIGEN DREHACHSEN UND WERKZEUGMASCHINE MIT DIESER**
TOOL HEAD UNIT FOR MACHINING WORKPIECES WITH THREE ROTARY AXES CAPABLE OF SIMULTANEOUS ACTION AND MACHINE TOOL COMPRISING SAME
UNITÉ DE TÊTE D'OUTIL DESTINÉE À L'USINAGE DE PIÈCES PAR ENLÈVEMENT DE COPEAUX POURVUE DE TROIS AXES ROTATIFS SIMULTANÉS ET MACHINE-OUTIL DOTÉE D'UN TELLE UNITÉ DE TÊTE D'OUTIL

(30) Priorität: 07.02.2019 DE 102019103009
(43) Veröffentlichungstag der Anmeldung: 12.08.2020
(73) Patentinhaber: F. Zimmermann GmbH, 73765 Neuhausen auf den Fildern (DE)
(72) Erfinder: Bouraoui, Mohamed Wassim, 73760 Ostfildern (DE)
(74) Vertreter: Rüger Abel Patentanwälte PartGmbB

(56) Entgegenhaltungen:
- EP-A1- 2 703 119
- CN-A- 102 490 026
- DE-A1-102005 043 835

## Beschreibung

Die vorliegende Erfindung betrifft eine Werkzeugkopfeinheit für spanabhebende Bearbeitung von Werkstücken, bspw. eine Fräskopfeinheit für eine Fräsmaschine, mit drei simultanfähigen Drehachsen sowie eine Werkzeugmaschine, insbesondere Fräsmaschine, mit einer derartigen Werkzeugkopfeinheit.

DE 10 2005 043 835 beschreibt eine Portalfräsmaschine, die ein auf Seitenständern abgestütztes Portal aufweist, das über einem mit dem Fundament fest verankerten Maschinentisch abgestützt ist. An dem in horizontaler X-Richtung verfahrbaren Portal ist in senkrechter Anordnung ein Ausleger gehalten, der über einen Kreuzschlitten in einer zu der X-Richtung senkrechten horizontalen Y-Richtung bewegbar ist. Der Ausleger weist einen in vertikaler Z-Richtung bewegbaren Tragbalken auf, der einen Fräskopf mit einer Motorfrässpindel trägt.

Der Fräskopf selbst weist eine Gabel auf, die mittels eines Torquemotors um eine mit der Z-Achse zusammenfallende C-Achse drehbar ist. An zwei Gabelarmen ist das Spindelgehäuse einer Frässpindel um eine zu der C-Achse senkrechte A-Achse schwenkbar aufgenommen. Als Antrieb zur Verschwenkung des Spindelgehäuses um die A-Achse dient ein weiterer Torquemotor. Die Frässpindel weist ein Motor angetriebenes Fräswerkzeug auf, das aus dem Spindelgehäuse nach außen ragt, um im Betrieb eine Zerspanoperation an einem auf dem Maschinentisch positionierten Werkstück durchzuführen.

Die Fräsmaschine ist zur Herstellung von Werkzeugen, Formen und Modellen oder für die Produktion in der Automobil-, Luft- und Raumfahrtindustrie vorgesehen und dazu geeignet, sehr große und komplizierte 3D-Teile, die äußerst feine Oberflächendetails aufweisen können, zu fertigen. Es sind aufwendige 5-Achsen-Simultanbearbeitungen mit hoher Präzision unter verhältnismäßig geringem Zeitaufwand möglich.

Allerdings weist dieser Zweiachs-Fräskopf den Nachteil auf, dass bei der Nullstellung A = 0°, wenn die Spindelachse und C-Achse zusammenfallen, eine sog. Polstelle entsteht. Die C-Achse dreht die Frässpindel lediglich um die eigene Achse, so dass keine Winkeländerung der Spindel in Bezug auf das Werkstück erfolgt. Folglich sind selbst für sehr kleine Winkeländerungen der Spindel Drehbewegungen der C-Achse von bis zu 90 Grad notwendig.

Aus der DE 20 2011 050 911 U1 ist eine Zweiachs-Fräskopfeinheit mit zwei zueinander schräggestellten Drehachsen C und B bekannt. Die Fräskopfeinheit weist einen Winkelfräskopf mit zweifacher Kröpfung auf, der an einem Ende um die Längsachse C eines Fräsbalkens mit integriertem Drehantrieb schwenkbar mit dem Fräsbalken verbunden ist. An einem anderen Ende trägt der Winkelfräskopf einen Spindelträger, der mittels eines an der Außenseite des Winkelfräskopfes angeordneten Antriebs um die zu der Fräsbalkenachse C geneigte Fräskopfachse B schwenkbar angeordnet ist.

Durch die Schrägstellung der Fräskopfachse B in Bezug auf die Fräsbalkenachse C kann das Polstellenproblem beseitigt werden. Allerdings sind mit allen Zweiachs-Fräskopfeinheiten, die eine Kombination der Drehachsen C und A oder C und B verwenden, weitere Nachteile verbunden. Bspw. kann während der Positionierung des Fräswerkzeugs in die zur Bearbeitung eines Werkstücks erforderliche Winkellage bei ungünstiger Winkelstellung um die A-Achse und bei Erreichen einer Achsgrenze der C-Achse ein Zurückdrehen des Fräswerkzeugs um einen beträchtlichen Winkel erforderlich sein. Z.B. kann wegen der erforderlichen Kabel- und Schlauchführung für die Kühlung, Schmierung, Energieversorgung und Signalübertragung die Drehung um die C-Achse auf ca. +/- 180° in Bezug auf eine vorbestimmte Nulllage begrenzt sein. Im Extremfall muss dann für eine nur geringe Lageänderung eine Neuanstellung um die C-Achse um annähernd eine gesamte Umdrehung vorgenommen werden. Dadurch kann die Bearbeitungsgeschwindigkeit deutlich verringert sein.

Außerdem ist bei Verwendung eines Zweiachs-Fräskopfes kaum eine elektronische Orientierungsfehlerkompensation möglich. Beispielweise können infolge von Fertigungstoleranzen, Verschleiß, Alterung, durch den dynamischen Betrieb und dgl. Maß- und Geometriefehler, wie z.B. Ungeradheiten von Achsen, Verbiegungen von Komponenten, Portaldurchhang, etc., entstehen. Diese könnten durch Vermessung des Messraums und geeignete Kalibrierungs- und Kompensationsmaßnahmen mittels der Antriebsachsen ausgeglichen werden. Dies kann aber eventuell nicht für alle Messraumpositionen und Fehler möglich sein, wenn lediglich zwei Drehachsen C, A bzw. C, B zur Verfügung stehen. Daher müssen sämtliche Komponenten eines Zweiachs-Fräskopfes und der gesamten Fräsmaschine mit sehr hoher Präzision gefertigt sein und arbeiten, um die erforderliche Qualität zu erhalten.

Aus der WO 00/25976 A2 ist ein auf dem Prinzip der Stabkinematik basierender Gelenkwerkzeugkopf bekannt, der eine in drei Achsen bewegliche Werkzeugplattform aufweist. An der Werkzeugplattform sind wenigstens drei unabhängig voneinander und parallel zueinander verfahrbare Lenker angelenkt, und wenigstens drei parallele Linearbewegungsantriebe für die Lenker sind im Abstand um die Werkzeugplattform herum angeordnet. Aufgrund der Lagerung der Werkzeugplattform kann eine daran montierte Motorspindel schnell in jede erforderliche Lage innerhalb des Messraums gebracht werden. Allerdings ist der Messraum aufgrund einer stark eingeschränkten Länge der Linearachse und auf etwa ±40° begrenzter Schwenkwinkel verhältnismäßig klein. Dadurch ist der Anwendungsbereich begrenzt. Große 3D-Teile, wie sie bspw. im Modellformen- und Formenwerkzeugbau üblich sind, sind kaum fertigbar.

Aus der DE 198 50 603 A1 ist eine Fräskopfeinheit mit einer kardanischen Lagerung einer Frässpindel bekannt. Die Fräskopfeinheit weist ein Lagergehäuse, das an einem in X-, Y- und Z-Richtung beweglichen Spindelbalken befestigt ist, und ein Schwenkgehäuse auf, das in dem Lagergehäuse um eine erste Achse B schwenkbar aufgenommen ist. Die Schwenkbewegung um die B-Achse wird durch Torquemotoren bewirkt, die beidseitig an dem Lagergehäuse angeflanscht sind und das Schwenkgehäuse direkt antreiben. In dem Schwenkgehäuse ist ein Spindelaufnahmegehäuse um eine waagrechte A-Achse schwenkbar angeordnet und wird durch beidseitig angeordnete Torquemotoren geschwenkt. Das Spindelaufnahmegehäuse trägt eine Motorfrässpindel mit Direktantrieb für ein Fräswerkzeug. Durch die zwei zueinander orthogonalen Schwenkachsen A, B der Fräskopfeinheit, die zu der Z-Achse nicht parallel verlaufen, kann die Frässpindel schnell unmittelbar in die jeweils erforderliche Bearbeitungslage verschwenkt werden. Eine Verschwenkung um eine mit der Z-Achse zusammenfallende C-Achse ist nicht erforderlich. Es ist auch eine elektronische Orientierungsfehlerkompensation möglich.

Die kardanische Lagerung, wie sie in der DE 198 50 603 A1 vorgeschlagen wird, baut jedoch verhältnismäßig groß. Jedes Gehäuse ist im Wesentlichen kastenartig ausgebildet, um darin ein weiteres Gehäuse gemeinsam mit einer Antriebswelle für dieses aufzunehmen. Dadurch sind auch die Schwenkwinkel um die Schwenkachsen A, B stark eingeschränkt.

Aus der EP 1 892 055 B1 ist ferner ein Dreiachs-Fräskopf mit drei zueinander orthogonalen, simultan drehend antreibbaren Drehachsen bekannt. Der Fräskopf weist einen Träger, der eine erste Drehachse C mit zugehöriger Antriebseinrichtung aufweist, einen an dem Träger gelagerten Schwenkkörper, der mittels einer zweiten Antriebseinrichtung in Bezug auf den Träger um eine zweite Drehachse B verschwenkbar ist, und eine an dem Schwenkkörper gelagerte Werkzeugmaschinenspindel auf, die mittels einer dritten Antriebseinrichtung in Bezug auf den Schwenkkörper um eine dritte Drehachse A verschwenkbar ist und ein Fräswerkzeug trägt. Der Schwenkkörper weist einen C-förmigen Grundkörper mit einer bogenförmigen Umfangsfläche, axialen Stirnflächen und einer Ausnehmung zwischen den C-Beinen des Schwenkkörpers auf, in der die Werkzeugmaschinenspindel aufgenommen ist. Der Schwenkkörpers selbst ist in Bezug auf den Träger ausschließlich durch eine dazwischen wirksame Bogenführungseinrichtung, die längs des Umfangs des Grundkörpers angeordnet ist, um die B-Achse verschwenkbar gelagert und geführt.

Der Fräskopf hat sich in der Praxis bewährt. Die drei zueinander orthogonalen, simultan antreibbaren Drehachsen A, B, C ermöglichen es, auch herausfordernde Aufgaben eines Dreiachs-Fräskopfes, wie z.B. das Wälzfräsen von Taschen mit umlaufenden, schrägen Wänden, mit hoher Dynamik, schnell, ohne Unterbrechung, insbesondere ohne Nachstellen der C-Achse, und mit hoher Genauigkeit zu bewältigen. Außerdem lassen sich Maß- und Geometriefehler der Maschine gut kompensieren.

Jedoch ist der Aufbau des Fräskopfes relativ kompliziert und kostspielig, was insbesondere auf die Verwendung der speziellen Bogenführung zurückzuführen ist. Die Zugänglichkeit zu den inneren Komponenten des Fräskopfes ist eingeschränkt. Außerdem liegt ein Nachteil des Fräskopfes in dem begrenzten Schwenkbereich der B-Achse, der in der Praxis etwa +/- 15° beträgt. Es wäre wünschenswert, einen größeren Schwenkbereich auch für die B-Achse zu haben, um komplexere Oberflächenmerkmale an Werkstücken schnell und präzise herstellen zu können.

CN 102 490 026 A beschreibt einen ähnlichen Dreiachs-Fräskopf mit drei zueinander orthogonalen, simultan drehend antreibbaren Drehachsen. Der Fräskopf weist einen vertikalen Tragarm und zwei zueinander verschwenkbare Kopfteile auf, wobei der zweite Kopfteil, der die Werkzeugmaschinenspindel aufnimmt, als ein Gabelkopf ausgebildet und über eine Bogenführungseinrichtung an dem ersten Kopfteil schwenkbar gelagert und geführt ist.

EP 2 703 119 A1 offenbart eine Bearbeitungsmaschine mit einem Revolverkopf, wobei ein Haltearm der Bearbeitungsmaschine um eine Drehachse drehbar ist, ein Lagerabschnitt für den Revolverkopf an dem Haltearm um eine Schwenkachse verschwenkbar gehalten ist und der Revolverkopf an dem Lagerabschnitt um eine Revolverachse drehbar befestigt ist. Die Schwenkachse verläuft zu der Drehachse unter einem Neigungswinkel, der zwischen 45° und 90° beträgt, und die Revolverachse verläuft zu der Schwenkachse unter einem Neigungswinkel, der größer als 0° ist.

Ausgehend davon ist es eine Aufgabe der vorliegenden Erfindung, die obigen Nachteile bzw. Unzulänglichkeiten zu beseitigen. Insbesondere ist es eine Aufgabe der vorliegenden Erfindung, eine für den Werkzeug-, Formen- und Modellbau geeignete dynamische Werkzeugkopfeinheit zu schaffen, die verhältnismäßig kompakt aufgebaut ist und relativ große Schwenkwinkel ermöglicht. Vorzugsweise sollte der Aufbau der Werkzeugkopfeinheit eine elektronische Orientierungsfehlerkompensation ermöglichen.

Eine weitere Aufgabe der vorliegenden Erfindung ist es, eine Werkzeugmaschine mit einer derartigen Werkzeugkopfeinheit zu schaffen, mit der auch große und komplexe 3D-Teile mit hoher Bearbeitungsgeschwindigkeit gefertigt werden können.

Diese und weitere Aufgaben der vorliegenden Erfindung werden durch die erfindungsgemäße Werkzeugkopfeinheit mit den Merkmalen des Patentanspruchs 1 und die Werkzeugmaschine nach Patentanspruch 18 gelöst.

Die für spanabhebende Bearbeitung von Werkstücken vorgesehene Werkzeugkopfeinheit gemäß der Erfindung weist einen Tragarm, der eine erste Achse C definiert, ein an dem Tragarm gelagertes erstes Kopfteil, das um die erste Achse C in Bezug auf den Tragarm drehbar angeordnet ist und eine in Bezug auf die erste Achse C um einen von 0° und 90° verschiedenen Winkel geneigte zweite Achse B definiert, ein an dem ersten Kopfteil gelagertes zweites Kopfteil, das um die zweite Achse B in Bezug auf das erste Kopfteil drehbar angeordnet ist, und eine an dem zweiten Kopfteil gelagerte Spindeleinrichtung auf, die um eine dritte Achse A in Bezug auf das zweite Kopfteil drehbar angeordnet ist. Der ersten, zweiten und dritten Achse C, B und A sind Antriebseinrichtungen zugeordnet, die zum gesonderten Antrieb und zur Steuerung der Drehungen des ersten Kopfteils, des zweiten Kopfteils und der Spindeleinrichtung um die jeweilige erste, zweite bzw. dritte Achse C, B bzw. A dienen. Gemäß der Erfindung sind die erste Drehachse C und die dritte Drehachse A zueinander orthogonal ausgerichtet, die zweite Drehachse B ist zu der dritten Drehachse A orthogonal ausgerichtet, und die dritte Drehachse A ist zu der ersten Drehachse C versetzt. Außerdem ist die zweite Drehachse B zu der dritten Drehachse A versetzt, oder sie schneidet sowohl die erste Drehachse C als auch die dritte Drehachse A schneidet.

Erfindungsgemäß sind zur schnellen und genauen Positionierung der Spindeleinrichtung mit dem daran montierten Arbeitswerkzeug in die jeweils erforderliche Winkellage während Bearbeitungsvorgänge drei unabhängig voneinander und simultan antreibbare Drehachsen vorgesehen, denen jeweils eine eigene ansteuerbare Antriebseinrichtung zugeordnet ist. Damit können die Komponenten der Dreiachs-Werkzeugkopfeinheit schnell und präzise in Bezug aufeinander verdreht bzw. verschwenkt werden, um jede gewünschte Bearbeitungsposition einzustellen. Durch Vorsehen von drei unabhängigen Drehachsen können Polstellen wie beim klassischen AC-Drehkopf umgangen und durch Vermeiden eines unnötigen Neuanstellens beim Erreichen einer Achsgrenze, insbesondere der C-Achse, kurze Bearbeitungszeiten sichergestellt werden.

Außerdem bieten die drei steuerbaren Drehachsen die Möglichkeit der Kalibrierung und Kompensation von Maß- und Geometriefehlern der Maschine. Hierzu kann der Messraum in einem Kalibrierungsvorgang bei unterschiedlichen Positionierungen der Werkzeugkopfeinheit genau vermessen werden, und die erfassten Abweichungen zwischen den Ist- und Sollwerten der Positionierungen können durch eine Steuerungseinheit während der Bearbeitung herangezogen werden, um die Werkzeugkopfeinheit mittels der drei Drehantriebsachsen automatisch in die präzise Position nachzustellen. Somit können Anforderungen an die Herstellungs- und Montagegenauigkeit der Bauteile, Führungen und Lager bei gleichbleibender Güte der erzeugten Produkte verringert werden. Ferner werden Kosten eingespart.

Gemäß der Erfindung ist die zweite Drehachse B gezielt um einen von 0° und 90° verschiedenen Winkel bezüglich der ersten Drehachse C geneigt. Sie wird somit hier auch als Schrägachse B bezeichnet. Der Neigungswinkel der Schrägachse B in Bezug auf die erste Drehachse C liegt im Allgemeinen im Bereich von 30° bis 60 °, in bevorzugten Ausführungsformen im Bereich von 40° bis 50 °. Am meisten bevorzugt beträgt der Neigungswinkel etwa 45°. Die Schrägachse B schafft die Grundlage für einen relativ großen Schwenkbereich der B-Achse. Bei einem 45°-Neigungswinkel zwischen der B- und der C-Achse kann die interpolierte räumliche B-Achse z.B. um bis zu +/- 45° geschwenkt werden. Auch der Schwenkbereich der A-Achse kann relativ groß bemessen sein und je nach Konstruktion z.B. -90° bis +120° oder sogar mehr betragen.

Es kann eine einfache Konstruktion mit guter Zugänglichkeit zu den Komponenten geschaffen werden. Durch die Schrägachse B müssen die Komponenten der Werkzeugkopfeinheit nicht mehr, wie im Stand der Technik, kastenartig ausgebildet und ineinander verschachtelt oder mit spezieller Bogenführung versehen werden. Die Komponenten können deutlich kleiner dimensioniert werden, und der Platzbedarf kann minimiert werden. Dies ergibt einen kompakten Aufbau der Werkzeugkopfeinheit mit geringer Störkontur und geringen bewegten Massen. Es sind hohe Beschleunigungen der angetriebenen Achsen möglich, so dass eine hochdynamische Werkzeugkopfeinheit und Werkzeugmaschine verwirklicht werden können. Gegebenenfalls vorhandene X-, Y- und Z-Antriebe zum Verfahren der Werkzeugkopfeinheit in allen drei Raumrichtungen können kleiner dimensioniert werden.

Die erfindungsgemäße Werkzeugkopfeinheit ist in einer bevorzugten Anwendung als Fräskopfeinheit zur Aufnahme einer Frässpindel vorgesehen. Vorzugsweise weist sie eine Motorfrässpindel mit einem eigenen Motorantrieb für das Werkzeug der Frässpindel auf. Sie kann für Vertikal-Fräsmaschinen, insbesondere Portalfräsmaschinen, oder auch für Horizontal-Fräsmaschinen verwendet werden. Es sind auch andere Anwendungen der erfindungsgemäßen Werkzeugkopfeinheit, bspw. zum Bohren und für andere spanabhebende Bearbeitungsoperationen, möglich.

Gemäß der Erfindung sind die erste Drehachse C und die dritte Drehachse A zueinander orthogonal ausgerichtet, und die zweite Drehachse B ist zu der dritten Drehachse A orthogonal ausgerichtet, aber zu der ersten Achse C geneigt. Eine zu den A- und C- Achsen "orthogonale B-Achse" (räumliche B-Achse) kann im Betrieb einfach durch Bewegung von jeweils zwei oder drei der Achsen A, B und C interpoliert werden.

In bevorzugten Ausführungsformen sind die erste und die dritte Achse C, A zueinander versetzt, während die zweite Achse B die erste und die dritte Achse C, A schneidet. Durch den Achsversatz bzw. die Exzentrizität zwischen der A- und der C-Achse kann die Konstruktion optimiert werden, um kurze Hebelarme, insbesondere an dem ersten Kopfteil, zu erhalten, was der Steifigkeit und Dynamik zugute kommt. Die Störkontur der gesamten Werkzeugkopfeinheit kann für die jeweilige Anwendung optimiert werden.

In weiteren Ausführungsformen kann die dritte Achse A sowohl zu der ersten als auch zu der zweiten Achse C, B versetzt sein, während die zweite Achse B nur die erste Achse C schneidet. Dadurch kann bedarfsweise die gesamte Länge der Werkzeugkopfeinheit reduziert werden. Es sind auch Ausführungsformen möglich, bei denen zusätzlich auch die C- und B-Drehachsen zueinander versetzt sind und sich nicht schneiden.

In allen vorstehend genannten Ausführungsformen können die erste, zweite und Spindelachse vorzugsweise alle in einer gemeinsamen Ebene verlaufen (wenn alle Achsen in der Nullstellung stehen), um unnötige Hebel und damit verbundene Biegebeanspruchungen zu vermeiden. Ein Achsversatz entlang der A-Achse ist aber bedarfsweise möglich.

In Ausführungsformen einer beliebigen vorstehend erwähnten Werkzeugkopfeinheit kann der Tragarm bspw. im Wesentlichen zylindrisch ausgebildet sein und Mittel, z.B. einen Befestigungsflansch, zur Befestigung an einem Träger einer Werkzeugmaschine aufweisen. Der Tragarm enthält die erste Antriebseinrichtung und kann eine von dieser drehend antreibbare hohlzylindrische Motorwelle umfassen, die koaxial zu der ersten Drehachse C angeordnet ist. Die Motorwelle kann zur Befestigung des ersten Kopfteils an ihr eingerichtet sein.

Die erste Antriebseinrichtung kann vorteilhafterweise einen ersten Torquemotor aufweisen, der zum direkten Drehantrieb der Motorwelle mit dieser gekoppelt ist. In dem hier verwendeten Sinne bezeichnet der Ausdruck "Torquemotor" einen Servomotor, dessen Geometrie speziell im Sinne hoher Drehmomente bzw. Kräfte anstelle einer hohen Leistungsabgabe konzipiert ist. Die Bauform der Torquemotoren ist daher eher kurz und mit gro-ßem Durchmesser. Damit die Kupferverluste und elektrischen Zeitkonstanten klein bleiben, haben diese Motoren auch mehr Pole als konventionelle Servomotoren. Sie besitzen auch eine hinreichend große thermische Zeitkonstante. Dies hat zur Folge, dass auch bei sehr kleinen Drehzahlen ein extrem hohes Drehmoment erreicht werden kann. Kurz gesagt, ist bei diesen Motoren die Drehmoment- bzw. Kraftabgabe statt des Wirkungsgrads optimiert. Moderne Ausführungen sind elektrisch gesehen dreiphasige bürstenlose Synchronmotoren mit Permanenterregung. Es sind Ausführungen mit Außen- oder Innenläufer bekannt. Torquemotoren werden von Motorherstellern neben herkömmlichen Servomotoren gesondert angeboten, wobei auch komplette Einbaueinheiten bestehend aus Rotor, Stator, Lagern und mit integrierter Kühlung erhältlich sind.

Die bei der Erfindung für die Drehachsen eingesetzten Torquemotoren sind vorzugsweise jeweils in Form eines direkt angetriebenen Rundmotors ausgebildet, der einen als Außenring ausgebildeten Stator mit Drehstromwicklungen sowie einen als Innenring ausgebildeten Rotor mit Permanentmagneten aufweist, der im Inneren des Stators, konzentrisch zu diesem angeordnet ist. Es können aber auch Torquemotoren mit einem Außenläufer verwendet werden. Die Verwendung von Torquemotoren als Direktantrieb für die C-Achse ermöglicht im Vergleich zu Servomotoren eine hohe Drehmomentabgabe, eine hohen Dynamik und Steifigkeit, eine geringe Verschleißanfälligkeit und leichte Montage bzw. Instandsetzung. Es sind hier aber auch Servomotoren, auch in Kombination mit einer Getriebeeinrichtung verwendbar.

In bevorzugten Ausführungsformen einer beliebigen vorstehend erwähnten Werkzeugkopfeinheit kann das erste Kopfteil ein ein- oder mehrfach gekröpftes Winkelgehäuse mit einem ersten Ende aufweisen, das im Wesentlichen zylindrisch, insbesondere passend zu der Motorwelle des Tragarms ausgebildet und eingerichtet ist, um daran in einer zu der ersten Drehachse C koaxialen Anordnung montiert zu sein. Das gekröpfte Winkelgehäuse kann ein zweites Ende aufweisen, das eine zylindrische und zu der zweiten Achse B koaxiale Aufnahmeöffnung für das zweite Kopfteil definiert.

Im Inneren des Winkelgehäuses kann die zweite Antriebseinrichtung untergebracht sein, die wenigstens einen zweiten Torquemotoren aufweisen kann. Bezüglich des zweiten Torquemotors gilt das vorstehend zu dem ersten Torquemotor der ersten Antriebeinrichtung Gesagte entsprechend. Vorzugsweise weist die zweite Antriebseinrichtung aber eine untersetzende Zahnradgetriebeeinrichtung auf, die zwischen dem zweiten Torquemotor und dem zweiten Kopfteil antriebsmäßig eingefügt ist, um eine Drehbewegung eines Rotors des zweiten Torquemotors um die zweite Achse B auf das zweite Kopfteil zu übertragen. Durch die Zwischenschaltung der Getriebeeinrichtung in dem B-Achsen-Antriebsstrang kann unter Erzielung eines hohen Drehmomentes der zweite Torquemotor deutlich kleiner ausgelegt werden als bei Direktantrieben. Dadurch können Bauvolumen und Gewicht des ersten Kopfteils minimiert werden.

Die untersetzende Zahnradgetriebeeinrichtung der zweiten Antriebeinrichtung kann vorzugsweise ein nicht selbsthemmendes, einstufiges Getriebe bilden, das bevorzugterweise mechanisch oder elektronisch verspannt ist. Es können Spiele in dem Getriebe weitgehend beseitigt werden, um eine hinreichende Steifigkeit und Dynamik sicherzustellen. In vorteilhaften Ausführungsformen kann die zweite Antriebseinrichtung bspw. zwei zweite Torquemotoren aufweisen, die jeweils eine Ritzelwelle der Zahnradgetriebeeinrichtung drehend antreiben, wobei die Ritzelwellen z.B. über eine Schrägverzahnung mit einem gemeinsamen Hohlrad der Zahnradgetriebeeinrichtung spielfrei kämmend in Eingriff stehen können. Ein Spiel kann z.B. dadurch eliminiert werden, dass die Motoren angesteuert werden, um etwas gegeneinander zu arbeiten. Alternativ kann für die zweite Antriebseinrichtung auch nur ein einziger Torquemotor verwendet werden, wobei z.B. eine Beveloid-Verzahnung oder dgl. für eine spielfreie mechanische Verpannung des Antriebsstrangs sorgen kann.

Es ist auch möglich, Verspann- und Justiereinrichtungen zur mechanisch spielfreien Verspannung des Zahnradgetriebes und automatischen Kompensation von Spielen vorzusehen. Derartige federbelastete automatische Verspann- und Justiereinrichtungen sind bspw. aus der DE 10 2005 043 835 A1 bekannt.

In bevorzugten Ausführungsformen einer beliebigen vorstehen erwähnten Werkzeugkopfeinheit ist das zweite Kopfteil als eine im Wesentlichen U-förmige Gabel ausgebildet, die eine Basis zur Befestigung der Gabel an einem Abtriebsteil der zweiten Antriebseinrichtung des ersten Kopfteils und von der Basis frei vorragende Schenkel aufweist. Die Schenkel verlaufen im Wesentlichen parallel, im Abstand zueinander und bilden Gabelarme. Zwischen den Gabelarmen kann die Spindeleinrichtung verschwenkbar aufgenommen sein. Dies ergibt eine konstruktiv einfache, übersichtliche Anordnung.

Die Spindeleinrichtung kann insbesondere eine zwischen den Gabelarmen schwenkbar angeordnete Spindelaufnahme aufweisen, die zur Aufnahme einer Werkzeugmaschinenspindel eingerichtet ist. Innerhalb der Spindelaufnahme kann eine Arbeitsspindel, bspw. Frässpindel, gesichert sein, wobei unterschiedliche Arbeitsspindeln, bspw. zum Schruppen oder zur Schlichtbearbeitung oder auch zum Bohren, vorgesehen werden können. Die Arbeitsspindel ist vorzugsweise durch einen eigenen integrierten Motor drehend antreibbar, der von den Antriebseinrichtungen für die Drehachsen entkoppelt ist. Es könnte aber auch eine Getriebespindel mit einem vorgelagerten Spindelmotor bspw. in einem Z-Schieber über der C-Achse oder in einem anderen Kopfabschnitt, z.B. dem Winkelgehäuse oder dgl., verwendet werden, wobei die Drehbewegung des Spindelmotors zu der Spindelwelle über Getriebestufen, meistens Stirnrad- bzw. Kegelradsätze für parallele bzw. geneigte Achsen, übertragen wird. Derartige Getriebespindeln sind für die A- oder B-Achsantriebe von Fräsköpfen allgemein bekannt.

Jeder Gabelarm des zweiten Kopfteils kann ein Gehäuse aufweisen, das einen Innenraum definiert bzw. begrenzt. In bevorzugten Ausführungsformen kann die dritte Antriebseinrichtung vollständig in dem Innenraum eines einzelnen Gabelarms untergebracht sein. In dem anderen Gabelarm können andere benötigte Einrichtungen, wie Schläuche zur Zuführung von Kühlmittel und Schmiermittel oder dgl., untergebracht werden. Die Anzahl von Komponenten kann dadurch reduziert werden (ein einziges Abtriebsrad), und es wird ein einfacher Aufbau geschaffen, der eine gute Zugänglichkeit und leichte Instandhaltung und Wartung ermöglicht. Die dritte Antriebseinrichtung kann aber auch auf beide Gabelarme verteilt sein, um die Spindeleinrichtung von beiden Seiten anzutreiben.

In bevorzugten Ausführungsformen weist die dritte Antriebseinrichtung wenigstens einen dritten Torquemotor und vorzugsweise ein weiteres untersetzendes Zahnradgetriebe auf, das zwischen dem dritten Torquemotor und der Spindeleinrichtung antriebsmäßig eingefügt ist, um eine Drehbewegung eines Rotors des dritten Torquemotors um die dritte Drehachse A auf die Spindeleinrichtung zu übertragen. Das weitere untersetzende Zahnradgetriebe kann ein nicht selbsthemmendes, vorzugsweise einstufiges Getriebe bilden und bevorzugterweise mechanisch oder elektronisch verspannt sein. Der wenigstens eine dritte Torquemotor und das weitere untersetzende Zahnradgetriebe können dem wenigstens einen zweiten Torquenmotor und der untersetzenden Zahnradgetriebeeinrichtung ähnlich sein, so dass die diesbezüglichen Ausführungen hier entsprechen gelten.

In bestimmten Ausführungsformen weist die dritte Antriebseinrichtung zwei dritte Torquemotoren auf, die jeweils eine eigene, weitere Ritzelwelle drehend antreiben, die zu der weiteren Zahnradgetriebeeinrichtung gehört. Die weiteren Ritzelwellen stehen mit einem gemeinsamen Stirnrad der weiteren Zahnradgetriebeeinrichtung z.B. über eine Schrägverzahnung spielfrei kämmend in Eingriff, wobei das Stirnrad mit dem Spindelgehäuse der Spindeleinrichtung drehfest verbunden ist. Ein Spiel kann z.B. dadurch eliminiert werden, dass die Motoren angesteuert werden, um etwas gegeneinander zu arbeiten. Alternativ kann für die dritte Antriebseinrichtung auch nur ein einziger Torquemotor verwendet werden, wobei z.B. eine Beveloid-Verzahnung oder dgl. für eine spielfreie mechanische Verpannung des Antriebsstrangs sorgen kann.

Es kann auch ein elektronisch verspannter Antrieb geschaffen werden, indem bspw. eine Motorsteuerung bewirkt, dass die beiden Torquemotoren etwas gegeneinander arbeiten. Dadurch kann auf einfache Weise ein dauerhaft spielfreier und wartungsfreier Antrieb ohne spezielle Verzahnung des Räderwerks geschaffen werden.

In alternativen Ausführungsformen einer beliebigen vorstehend erwähnten Werkzeugkopfeinheit kann die zweite Antriebseinrichtung oder die dritte Antriebseinrichtung oder können beide einen zweiten bzw. dritten Torquemotor aufweisen, der zum direkten Drehantrieb des zweiten Kopfteils bzw. der Spindeleinrichtung eingerichtet ist. Durch Vorsehen von Direktantrieben für die B- und/oder die A-Achse kann die Steifigkeit der Antriebsanordnung erhöht und die Dynamik der Werkzeugkopfeinheit verbessert werden, wenngleich der Bauraum bei vergleichbarer Leistung etwas vergrößert wird.

Allgemein sind für alle Drehachsen A, B, C prinzipiell je nach Anwendung und Anforderung unterschiedliche Antriebsarten verwendbar, wobei bevorzugt im Wesentlichen spielfreie Antriebe zum Einsatz kommen sollten. Hierzu gehören z.B.: Torquemotor-Direktantriebe, die einzeln oder in Tandemanordnung vorgesehen sein können; Verspannantriebe mit zwei oder mehreren Motoren und Motor-Getriebe-Kombinationen, wobei das Getriebe vorzugsweise einstufig, aber auch mehrstufig ausgeführt sein kann; Verspannantriebe mit einem einzigen Motor und einem mechanisch vorgespannten Getriebe, z.B. mit Verspann- oder Beveloid-Zahnrädern; Schneckengetriebe; oder elektronisch verspannte Antriebe. Spielbehaftete Antriebe sind je nach Anwendung prinzipiell nicht ausgeschlossen.

In bevorzugten Ausführungsformen einer beliebigen oben erwähnten Werkzeugkopfeinheit kann jeder Drehachse A, B, C ein individuelles Messsystem zur Messung der relativen Winkelposition und/oder Winkelgeschwindigkeit eines Rotors in Bezug auf einen Stator der jeweiligen Antriebseinrichtung für die jeweilige Drehachse zugeordnet sein. Es sind unterschiedliche Arten von Messsystemen verwendbar, wobei im Allgemeinen Lage- bzw. Positionsmesssysteme benutzt werden. Aus den Lagemesswerten können die Geschwindigkeits-, Beschleunigungs- und Ruckwerte durch zeitliche Ableitung ermittelt werden. Aus der Technik sind hierzu unterschiedliche, vorzugsweise kontakt- bzw. berührungslose, bspw. optisch, magnetisch oder kapazitiv arbeitende Messsysteme oder auch taktile Messsysteme bekannt. Die von den hochauflösenden Messsystemen erfassten Messsignale können an eine Steuerung der Werkzeugkopfeinheit übermittelt und zur präzisen Positionierung des Arbeitswerkzeugs in Bezug auf das Werkstück, einschließlich einer Kompensation von Maß- und Geometriefehlern der Maschine, verwendet werden.

Gemäß einem weiteren Aspekt der vorliegenden Erfindung ist eine Werkzeugmaschine, insbesondere eine bspw. in vertikaler Portalbauweise oder in Horizontalbauweise ausgeführte Fräsmaschine, geschaffen, die einen in einem dreidimensionalen Messraum, z.B. in X-, Y- und Z-Koordinatenrichtungen positionierbaren Träger aufweist, der eine Werkzeugkopfeinheit, insbesondere Fräskopfeinheit, mit den vorstehend erwähnten Merkmalen aufweist. Es kann eine für sehr große 3D-Teile und zur 6-Achsen-Simultanbearbeitung geeignete Werkzeugmaschine mit einem äußerst flexiblen, dynamischen Werkzeugkopf geschaffen werden, mit dem auch komplizierte und äußerst feine Oberflächendetails mit hoher Präzision und Bearbeitungsgeschwindigkeit gefertigt werden können.

Weitere vorteilhafte Einzelheiten der Erfindung ergeben sich aus Unteransprüchen, der Zeichnung sowie der zugehörigen Beschreibung. In der Zeichnung ist ein Ausführungsbeispiel des Gegenstandes der Erfindung dargestellt. Es zeigen:
Figur 1 eine beispielhafte erfindungsgemäße Portalfräsmaschine in einer schematisierten perspektivischen Darstellung;
Figur 2 eine vergrößerte Darstellung eines in der Portalfräsmaschine nach Figur 1 verwendbaren erfindungsgemäßen Fräskopfes gemäß einer Ausführungsform, in einer vereinfachten Perspektivdarstellung;
Figuren 3a und 3b den Fräskopf nach Figur 2 in vereinfachten Perspektivdarstellungen, betrachtet aus unterschiedlichen Blickrichtungen, mit teilweise geöffnetem Gehäuse;
Figuren 4a-4c verschiedene ebene Seitenansichten des Fräskopfes nach Figur 2, in vereinfachten Darstellungen und mit teilweise geöffnetem Gehäuse;
Figuren 5-7 verschiedene Längsschnittansichten des Fräskopfes nach Figur 2, in vereinfachten Darstellungen;
Figuren 8a-8c unterschiedliche konstruktive Varianten eines Werkzeugkopfes, bspw. des Fräskopfes nach Figur 2, in stark vereinfachten Prinzipdarstellungen, wovon Figuren 8a und 8c konstruktive Varianten gemäß der Erfindung, wie beansprucht, zeigen, während die konstruktive Variante nach Figur 8b nicht zu der beanspruchten Erfindung gehört; und
Figuren 9a und 9b weitere Ausführungsformen eines in Werkzeugmaschinen verwendbaren Werkzeugkopfes gemäß der Erfindung, in vereinfachten Darstellungen, teilweise aufgeschnitten.

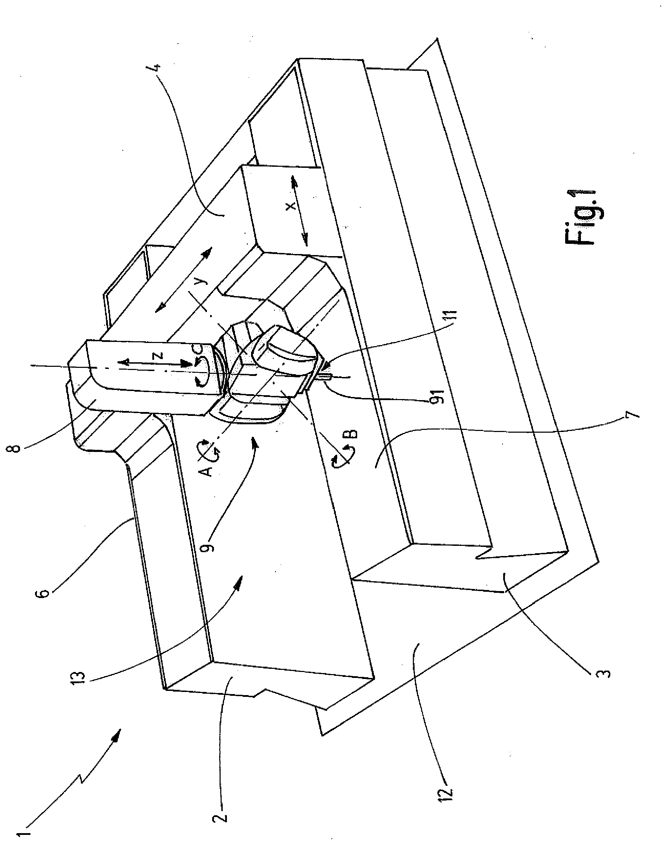

In Figur 1 ist auf schematisierte Weise eine Portalfräsmaschine 1 gemäß der vorliegenden Erfindung veranschaulicht. Die Portalfräsmaschine 1 weist ein auf länglichen massiven Seitenständern 2, 3 abgestütztes Portal 4 auf, das in einer durch einen Doppelpfeil angezeigten horizontalen X-Richtung verfahrbar und über hier lediglich angedeutete Führungen 6, 7 präzise geführt ist, die an den beiden Seitenständern 2, 3 vorgesehen sind. An dem Portal 4 ist in senkrechter Anordnung ein Tragbalken 8 gehalten, der über einen Kreuzschlitten längs des Portals 4 in der angezeigten horizontalen Y-Richtung und über einen Z-Schlitten in vertikaler Z-Richtung bewegbar ist. Der Tragbalken 8 trägt eine Fräskopfeinheit 9 mit einer Frässpindel 11, die zur zerspanenden Bearbeitung eines hier nicht näher veranschaulichten Werkstücks dient, das auf einem mit dem Fundament fest verankerten Maschinentisch 12 anzuordnen ist. Der Fräskopf 9 mit der Frässpindel 11 kann somit in allen drei Koordinatenrichtungen X, Y und Z eines durch die Seitenständer 2 festgelegten dreidimensionalen Messraums 13 beliebig positioniert werden. Die Antriebseinrichtungen für die linearen Achsen, bspw. Linearmotoren, zugehörige Führungen, Schlitten, Wegmesssysteme und Steuerungen sind in Figur 1 aus Einfachheitsgründen nicht explizit dargestellt. Sie sind als solche bekannt und nicht Gegenstand der Erfindung.

Es sollte erwähnt werden, dass die in Figur 1 veranschaulichte Portalfräsmaschine 1 und die Fräskopfeinheit 9 nur Beispiele für eine Werkzeugmaschine und Anwendung darstellen, in denen die erfindungsgemäße Fräskopfeinheit 9 verwendet werden kann. Sie kann sowohl für Vertikal- als auch für Horizontal-Werkzeugmaschinen verwendet werden. Sie kann für unterschiedliche Anwendungen, bspw. auch zum Bohren und für andere spanabhebende Bearbeitungsoperationen, verwendet werden. Insofern ist, sofern im Folgenden auf eine Fräskopfeinheit 9, oder kurz einen Fräskopf 9, Bezug genommen wird, darunter stets allgemein eine Werkzeugkopfeinheit für eine Arbeitsspindel 11 zur spanabhebenden Bearbeitung von Werkstücken zu verstehen.

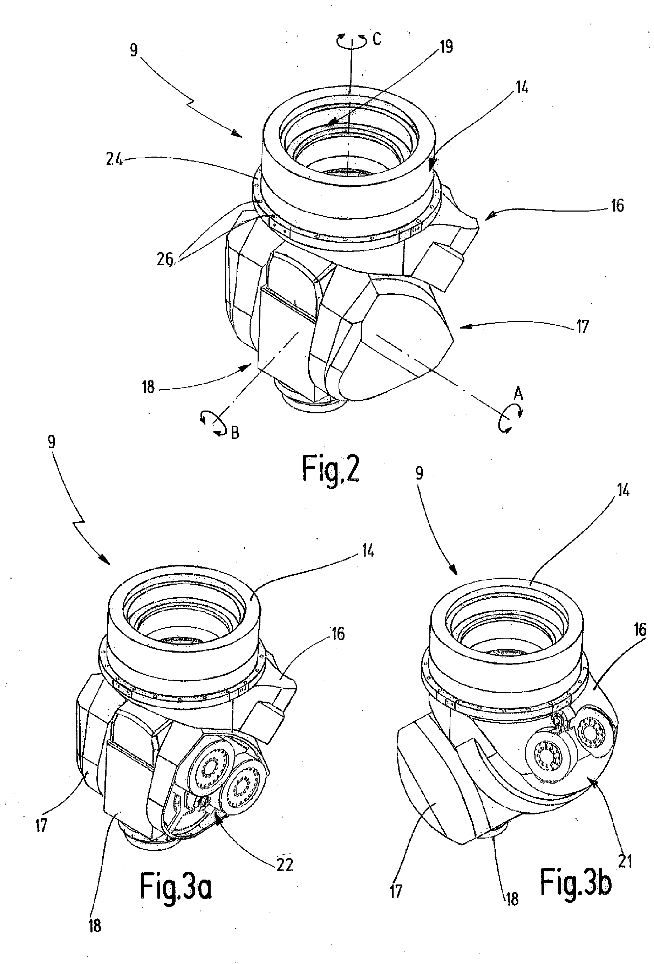

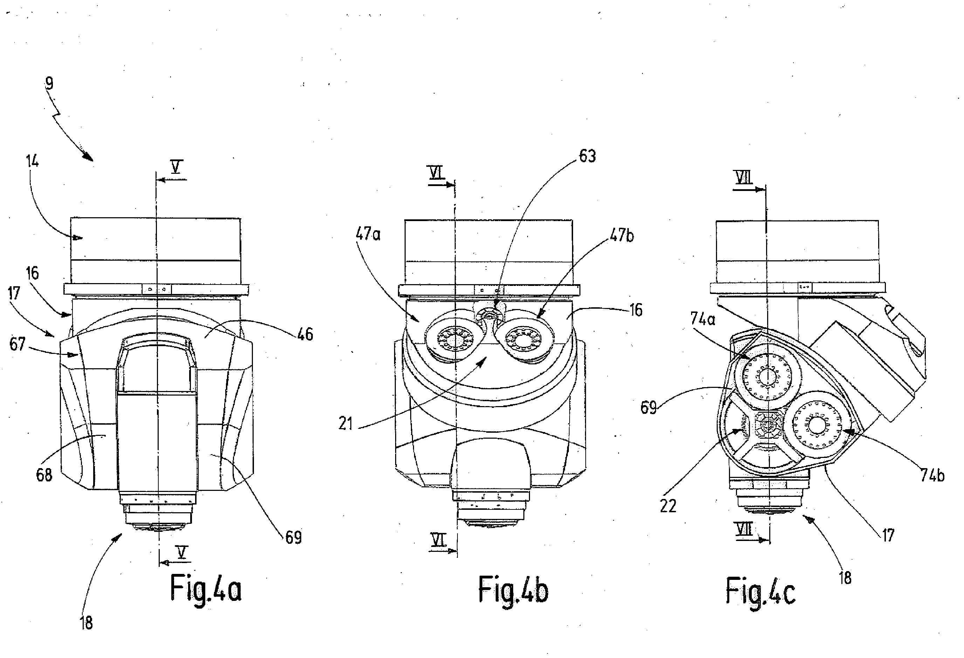

Eine erste Ausführungsform eines Fräskopfes 9 gemäß der Erfindung ist in größeren Einzelheiten, etwas schematisiert und zum Teil in unterschiedlichen Maßstäben in den Figuren 2 bis 4 veranschaulicht. Zu dem Fräskopf 9 gehören im Wesentlichen ein Tragarm 14, der zur Befestigung an dem Tragbalken 8 dient und der eine erste Drehachse C definiert, ein an dem Tragarm 14 gelagertes erstes Kopfteil 16, das um die erste Drehachse C in Bezug auf den Tragarm drehbar angeordnet ist und eine in Bezug auf die erste Achse C geneigte zweite Achse B definiert, ein an dem ersten Kopfteil 16 gelagertes zweites Kopfteil 17, das um die zweite Drehachse B in Bezug auf das erste Kopfteil 16 drehbar angeordnet ist, und eine an dem zweiten Kopfteil 17 gelagerte Spindeleinrichtung 18, die um eine dritte Drehachse A in Bezug auf das zweite Kopfteil drehbar angeordnet ist. Jeder der Drehachsen C, B und A ist eine individuelle Antriebseinrichtung 19, 21 bzw. 22 zugeordnet, die zum gesonderten Antrieb und zur Steuerung der Drehung des ersten Kopfteils 16, des zweiten Kopfteils 17 bzw. der Spindeleinrichtung 18 um die jeweilige erste, zweite bzw. dritte Drehachse C, B bzw. A dient. Die erste Antriebseinrichtung 19 für die C-Achse ist in den Figuren 2, 3a und 3b ersichtlich, während die zweite und die dritte Antriebseinrichtung 21, 22 insbesondere aus den Figuren 3a, 3b, 4b und 4c hervorgehen, in denen Gehäusedeckel von dem Gehäuse des Fräskopfes 9 teilweise entfernt sind, um einen Blick auf die Antriebseinrichtungen 21, 22 zu ermöglichen.

Wie auch aus Figur 1 erkennbar, fällt die erste Drehachse C, wenn der Fräskopf 9 an der Vertikal-Portalfräsmaschine 1 eingesetzt wird, mit der vertikalen Richtung Z zusammen, während die zweite Drehachse B des Fräskopfs 9 zu der C-Drehachse und der horizontalen X-Y-Ebene in Figur 1 geneigt verläuft und die dritte Drehachse A eine horizontale Achse ist, die in der X-Y-Ebene verläuft. Es sollte beachtet, dass entsprechend der in Technik üblichen Konvention in der Nullstellung der Drehachsen die C-Achse die Drehung um die Z-Achse definiert, die rechtwinklig zu der bearbeiteten Werkstückoberfläche verläuft, während die zu der C-Achse orthogonale A-Achse die Drehung um die X-Achse definiert, die in Richtung des längsten Verfahrwegs der Maschine verläuft, und die zu der C- und A-Achse orthogonale B-Achse (hier als räumliche B-Achse bezeichnet) die Drehung um die Y-Achse definiert. In dem dargestellten Beispiel und gemäß einem Aspekt der Erfindung fällt die zweite Drehachse B des Fräskopfs 9 (auch als Kopf-B-Achse bezeichnet) gezielt nicht mit der räumlichen B-Achse zusammen, sondern ist zu dieser und zu der C-Drehachse um einen von 0° und 90° verschiedenen Winkel schräg ausgerichtet. Außerdem ist in dem dargestellten Beispiel die dritte Achse A zu der ersten Achse C horizontal versetzt angeordnet, und die B-Achse schneidet sowohl die C-Achse als auch die A-Achse.

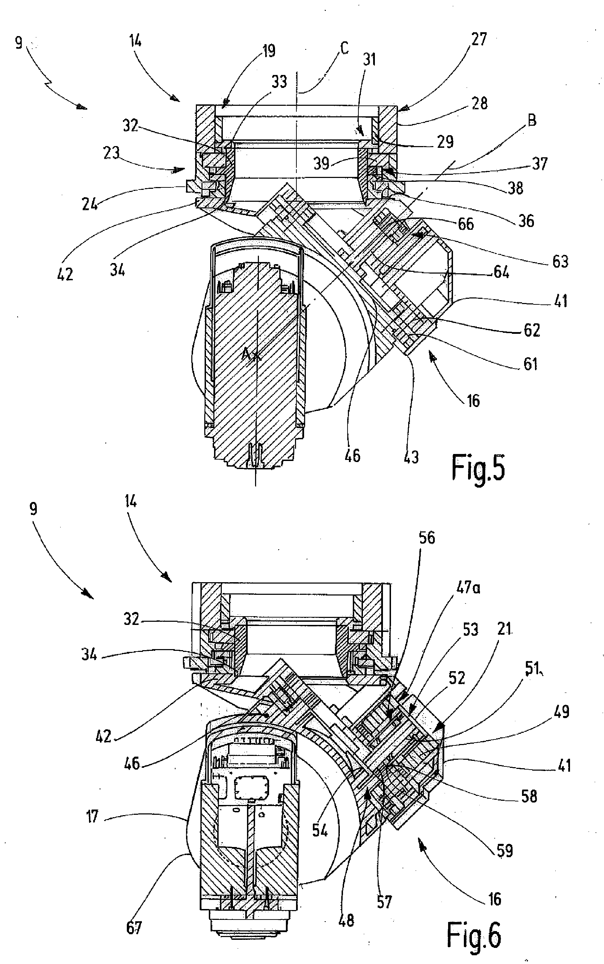

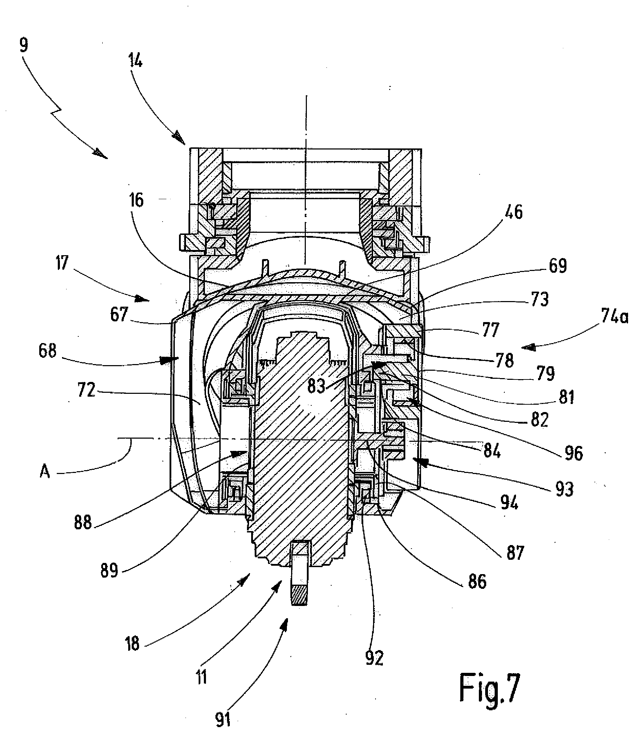

Die vorstehend erwähnten Komponenten 14-22 des Fräskopfes 9 gemäß den Figuren 1-4 sind in größeren Einzelheiten in den Figuren 5-7 dargestellt, die Längsschnittansichten durch den Fräskopf 9 zeigen. Dabei zeigt Figur 5 eine Schnittdarstellung entlang der Schnittlinie V-V in Figur 4a, während die Figuren 6 und 7 Schnittbilder entlang der Schnittlinie VI-VI in Figur 4b bzw. der Schnittlinie VII-VII in Figur 4c zeigen.

Der Tragarm 14 weist eine im Wesentlichen zylindrische Gestalt mit einem zylindrischen oder rohrförmigen Tragkörper 23 auf, von dem ein radialer Flansch 24 nach außen ragt, der der Befestigung des Tragarms 14 bzw. des Fräskopfes 9 an dem Träger der Werkzeugmaschine, bspw. dem Tragbalken 8 der Portalfräsmaschine 1, dient. Der Befestigungsflansch 24 kann, wie insbesondere aus den Figuren 2 und 3 hervorgeht, Bohrungen 26 zur Schraubbefestigung des radialen Flansches 24 an dem Träger der Werkzeugmaschine aufweisen, wobei aber auch andere Befestigungsarten für den Tragarm 14 möglich sind.

An dem Befestigungsflansch 24 ist die erste Antriebseinrichtung 19 angebracht. Die erste Antriebseinrichtung 19 ist hier zum direkten Antrieb und zur Steuerung der Drehung des ersten Kopfteils um die C-Achse eingerichtet. Sie ist durch einen ersten Torquemotor 27, also in etwa einen für hohe Drehmomente ausgelegten Servomotor, gebildet, zu dem im Wesentlichen ein ringförmiger Stator 28 und ein innerhalb des Stators 28 drehbar angeordneter Rotor 29 gehören. Der Stator 28 ist an dem Tragkörper 23 befestigt, während der ebenfalls ringförmige Rotor 29 unter Ausbildung eines geringen Spalts dem Stator 28 radial gegenüberliegend angeordnet und über Verbindungsmittel 31 mit einer Motorwelle 32 drehfest verbunden ist.

Die Motorwelle 32 ist im Wesentlichen hohlzylindrisch mit einem ersten Ende 33, das mit dem Stator 28 des Torquemotors 27 verbunden ist, und einem entgegengesetzten, in den Figuren 5-7 unteren, zweiten Ende 34 ausgebildet, das zur Befestigung des ersten Kopfteils 16 an dem Tragarm 14 dient. Ein Axial-Radial-Lager 36, das zwischen dem zweiten Ende 34 der Motorwelle 32 und dem Tragkörper 23 eingefügt ist, sorgt für eine radiale und axiale Abstützung und drehbare Lagerung der Anordnung aus dem Stator 28 und der Motorwelle 32 in Bezug auf den Tragkörper 23.

Ein erstes Messsystem 37 ist zur Messung der relativen Winkelposition und/oder Winkelgeschwindigkeit der Motorwelle 32 bzw. des Rotors 29 in Bezug auf den ortsfesten Tragkörper 23 bzw. den Stator 28 vorgesehen. Hierzu weist die Motorwelle 32 in dem dargestellten Beispiel in ihrem Mittelabschnitt einen nach außen vorspringenden ringförmigen Kragen 38 auf, an dem eine Maßverkörperung vorgesehen sein kann, deren Vorbeilaufen mittels eines Sensors bzw. Messaufnehmers erfasst werden kann, der ortsfest an dem Tragkörper 23 angebracht sein kann. Die Maßverkörperung und der Sensor sind in den Figuren nicht speziell dargestellt. Es können unterschiedliche, vorzugsweise kontakt- bzw. berührungslose, bspw. optisch, magnetisch oder kapazitiv arbeitende Messsensoren bzw. Messsysteme verwendet werden, die die Messsignale, die die erfassten Winkelpositionen bzw. -geschwindigkeiten kennzeichnen, an eine hier nicht näher dargestellte Steuerung des Fräskopfes senden können, die die Positionierung der Arbeitsspindel 11 steuert.

Außerdem kann zwischen der Motorwelle 32 und dem Tragkörper 23 eine erste Klemmeinrichtung 39 eingefügt sein, die dazu eingerichtet ist, die Motorwelle 32 während der Bearbeitung eines Werkstücks in der gewünschten Winkelstellung festzuklemmen, um ein ungewolltes Verdrehen der Motorwelle 32 um die C-Achse infolge von Reaktionskräften bei der Werkstückbearbeitung zu verhindern.

Wie aus den Figuren hervorgeht, weist das erste Kopfteil 16 ein hier mehrfach gekröpftes Winkelgehäuse 41 auf, um die zueinander schräggestellten Achsen C und B aufzunehmen. Das Winkelgehäuse 41 weist, wie insbesondere aus den Figuren 5 und 6 ersichtlich, ein erstes Ende oder einen ersten Abschnitt 42 auf, das bzw. der im Wesentlichen zylindrisch, insbesondere passend zu der Motorwelle 32 des Tragarms 14 ausgebildet ist, um das zweite Ende 34 der Motorwelle 32 zu umgreifen und an diesem montiert zu werden. Entsprechende Befestigungsmittel, z.B. Schraubmittel, um das erste Ende 42 des Winkelgehäuses 41 an dem zweiten Ende 34 der Motorwelle 32 zu sichern, sind in den Figuren der Übersichtlichkeit wegen weggelassen. Jedenfalls ist, wenn das Winkelgehäuse 41 auf derartige Weise an der Motorwelle 32 fixiert ist, das erste Kopfteil 16 gemeinsam mit der Motorwelle 32 um die C-Achse verdrehbar bzw. verschwenkbar.

Das Winkelgehäuse 41 weist ferner ein zweites Ende bzw. einen zweiten Abschnitt 43 auf, das bzw. der eine zylindrische und zu der zweiten Achse B koaxiale Aufnahmeöffnung 44 für das zweite Kopfteil 17 definiert. Die Aufnahmeöffnung 44 ist bemessen und angeordnet, um eine Basis 46 des zweiten Kopfteils 17 aufzunehmen und derart zu sichern, dass das zweite Kopfteil 17 um die zu der C-Achse schräggestellte B-Achse verdreht werden kann.

Zum Antrieb und zur Steuerung der Drehung des zweiten Kopfteils 17 um die zweite Achse B dient die zweiten Antriebseinrichtung 21. Wie insbesondere aus den Figuren 3b, 4b und 6 ersichtlich, ist die zweite Antriebseinrichtung 21 hier durch einen Getriebeantrieb gebildet, zu dem zwei zweite Torquemotoren 47a, 47b und eine untersetzende Getriebeeinrichtung 48 gehören. Die zweiten Torquemotoren 47a, 47b sind in ähnlicher Weise wie der erste Torquemotor 27 der ersten Antriebseinrichtung 19 als Rundmotoren mit einem äußeren Statorring 49, der Drehstromwicklungen trägt, und einem inneren Rotorring 51 ausgebildet, der mit Permanentmagneten versehen ist. Allerdings sind die Torquemotoren 47a, 47b, nachdem sie nicht als Direktantriebsmotoren konzipiert sind, deutlich kleiner als der erste Torquemotor 27 bemessen, weil ihre Drehmomentabgabe über die untersetzende Getriebeeinrichtung 48 verstärkt und auf das zweite Kopfteil 17 übertragen wird. Insofern ist zur Unterbringung der zweiten Torquemotoren 47a, 47b in dem Winkelgehäuse 41 des ersten Kopfteils 16 ein nur geringer Bauraum erforderlich.

Wie insbesondere aus Figur 6 ersichtlich, ist der Statorring 49 des Torquemotors 47a an dem Winkelgehäuse 41 starr befestigt, während der Rotorring 51 radial innerhalb des Statorrings 49 und in geringem radialem Abstand zu diesem drehbar angeordnet ist. Der Rotorring 51 ist an dem äußeren Ende mit einem ersten Wellenende 52 einer Ritzelwelle 53 drehfest verbunden, bspw. verschraubt. Die Ritzelwelle 53 erstreckt sich ausgehend von dem ersten Wellenende 52 durch den Innenraum des Rotorrings 51 hindurch und ragt mit ihrem zweiten Wellenende 54 über den Rotorring 51 und den Statorring 49 hinaus. In ihrem Zwischenabschnitt ist die Ritzelwelle 53 gemeinsam mit dem Rotorring 51 über eine geeignete Lagereinrichtung 56, bspw. zwei im Abstand zueinander angeordnete Schrägkugellager, an dem Winkelgehäuse 41 axial und radial abgestützt und drehbar gelagert.

Es sollte verstanden werden, dass jeder der zweiten Torquemotoren 47a, 47b den gleichen Aufbau mit dem Statorring 49 und dem Rotorring 51 sowie der darin angeordneten Ritzelwelle 53 aufweist. Die beiden Ritzelwellen 53, die den beiden zweiten Torquemotoren 47a, 47b zugeordnet sind, gehören zu der untersetzenden Getriebeeinrichtung 48, die zwischen den zweiten Torquemotoren 47a, 47b und dem zweiten Kopfteil 17 antriebsmäßig eingefügt ist. Die beiden Ritzelwellen 53 weisen an ihren zweiten Wellenenden 54 eine Außenverzahnung 57 auf, die mit einer passenden Innenverzahnung 58 eines Hohlrads 59 kämmend in Eingriff steht. Das Hohlrad 59 ist mit der Basis 46 des zweiten Kopfteils 17 drehfest verbunden, vorzugsweise verschraubt. Somit dreht sich die Basis 46 des zweiten Kopfteils 17 gemeinsam mit dem Hohlrad 59 um die zweite Drehachse B, wenn dieses durch die zweiten Torquemotoren 47a, 47b über die untersetzende Getriebeeinrichtung 48 in Drehung versetzt wird.

Die hier veranschaulichte beispielhafte Ausführungsform der zweiten Antriebseinrichtung 21 bietet viele Vorteile. Vorteilhafterweise können durch eine geeignete Untersetzung, die wenigstens 1:2, vorzugsweise wenigstens 1:4 oder sogar größer zu wählen ist, sehr hohe Drehmomente erzeugt werden, wobei hierzu sehr schlank bauende, kompakte und leichte Torquemotoren 47a, 47b ausreichen. Damit kann ein erstes Kopfteil 16 und insgesamt ein Fräskopf 9 mit kleinem Bauvolumen und geringer Störkontur geschaffen werden, der sich auch für Bearbeitungsoperationen in einem beschränkten Raum gut eignet. Die Masse der Anordnung kann gering gehalten werden. Da diese Masse zudem weit weg von den Lagern der Werkzeugmaschine 1 angreift, wird die Neigung zu Schwingungen oder Pendelbewegungen im Betrieb reduziert. Dies schafft die Grundlage für eine hohe Steifigkeit und Dynamik der Maschine und für eine hohe Oberflächenqualität auch bei hohen Vorschubgeschwindigkeiten und schnellen Lastwechseln. Trotz der eingeführten Untersetzung ist die Drehgeschwindigkeit um die B-Achse ausreichend. Insofern ist vorzugsweise lediglich eine einzige Untersetzungsstufe vorgesehen. Ein mehrstufiges Getriebe wäre aber prinzipiell auch möglich.

Ferner ist von Vorteil, wenn die Getriebeeinrichtung 48 ein nicht selbsthemmendes Getriebe bildet. Beschädigungen beim Auflaufen des Fräskopfes 9 gegen ein Hindernis können somit weitgehend vermieden oder zumindest reduziert werden. Außerdem ist vorzugsweise lediglich eine einzelne Räderstufe vorgesehen, um eine Nachgiebigkeit des Getriebes bzw. der Kraftübertragungsstrecke wirksam zu verhindern.

Ebenso ist es vorteilhaft, wenn die Getriebeeinrichtung 48 derart mechanisch spielfrei verspannt ist, dass kaum Flankenspiele zwischen den miteinander kämmenden Verzahnungen vorhanden sind. Die spielfreie Verspannung kann bewerkstelligt werden, indem Getriebe mit Verspann- oder Beveloid-Zahnrädern, Schneckengetriebe oder dgl. verwendet werden. Eine Verspannung kann auch auf elektronischem Wege erfolgen, indem die beiden Torquemotoren 47a, 47b von einer Steuerung derart angesteuert werden, dass sie geringfügig gegeneinander arbeiten.

Erneut Bezug nehmend auf die Figuren 5 und 6 ist ersichtlich, dass das Hohlrad 59 gemeinsam mit der daran befestigten Basis 46 des zweiten Kopfteils 17 über eine Axial-Radial-Lagereinheit 61 gegen das zweite Ende 43 des Winkelgehäuses 41 axial und radial abgestützt und drehbar gelagert ist.

Außerdem ist eine Achsklemmeinheit 62 für die B-Achse, wie in Figur 5 schematisch dargestellt, an dem zweiten Ende 43 des Winkelgehäuses 41 zwischen diesem und dem Hohlrad 59 eingefügt, um im Betrieb, während einer Werkstückbearbeitung das Hohlrad 59 mit dem damit drehfest verbundenen zweiten Kopfteil 17 in Bezug auf die zweite Achse B in einer gewünschten Winkelstellung festzuklemmen bzw. zu fixieren. Die Klemmung muss nicht unbedingt direkt an dem Hohlrad 59, sondern kann auch an einen separaten Ring eingreifen.

Zur Bestimmung der Winkelposition und/oder Winkelgeschwindigkeit des zweiten Kopfteils 17 um die zweite Drehachse B ist ein zweites Messsystem 63 vorgesehen. In dem dargestellten Beispiel ist hierzu, wie aus Figur 5 ersichtlich, ein Wellenfortsatz 64 an der Basis 46 des zweiten Kopfteils 17 befestigt, der sich ausgehend von der Basis 17 nach außen koaxial mit der B-Achse erstreckt. An seinem freien Ende 66 kann der Wellenfortsatz 64 eine Maßverkörperung tragen, die von einem gegenüberliegenden, an dem Winkelgehäuse 41 starr angebrachten Sensor bzw. Messaufnehmer erfasst werden kann. Die Maßverkörperung und der Sensor sind in den Figuren der Übersichtlichkeit wegen nicht im Detail dargestellt. Für das zweite Messsystem 63 gelten aber prinzipiell die gleichen Ausführungen wie für das erste Messsystem 37. Wie für die C-Drehachse können auch für die B-Achse Hohlring-Messsysteme oder Ähnliches verwendet werden.

Indem nun insbesondere auf die Figuren 3a, 4a, 4c und 7 Bezug genommen wird, ist nachstehend das zweite Kopfteil 17 näher erläutert. Das zweite Kopfteil 17 ist, wie ersichtlich, durch eine im Wesentlichen U-förmige Gabel 67 gebildet, die die Basis 46 zur Befestigung des zweiten Kopfteils 17 an dem Hohlrad 59 umfasst. Ferner weist die Gabel 67 hier zwei von der Basis 46 wegragende Schenkel 68, 69 auf, die im Wesentlichen parallel, im Abstand zueinander verlaufen und Gabelarme der Gabel 67 bilden. Die Gabel 67 enthält ein Gehäuse 71, das im Bereich der Gabelarme 68, 69 Innenräume 72, 73 zur Unterbringung der Komponenten des zweiten Kopfteils 17 bildet.

In den Figuren 3a und 4c ist eine Wand des Gabelgehäuses 71 entfernt, um einen Blick in den Innenraum 73 des Gabelarmes 69 zuzulassen. Wie zu ersehen ist, ist die dritte Antriebseinrichtung 22 für die dritte Drehachse A in dem dargestellten Beispiel (wie die zweite Antriebseinrichtung 21) ebenfalls durch eine Kombination von zwei dritten Torquemotoren 74a, 74b und ein weiteres untersetzendes Zahnradgetriebe 76 gebildet, das zwischen den dritten Torquemotoren 74a, 74b und der Spindeleinrichtung 18 antriebsmäßig eingefügt ist, um eine Drehbewegung der dritten Torquemotoren 74a, 74b in eine Drehbewegung der Spindeleinrichtung 18 um die A-Achse umzusetzen.

Die dritten Torquemotoren 74a, 74b sind in geringem Abstand zueinander in Umfangsrichtung um eine Mitte des Gabelarms 69 angeordnet und in ähnlicher Weise wie die zweiten Torquemotoren 47a, 47b ausgebildet. Sie weisen einen äußeren ringförmigen Stator 77, der in dem Innenraum 73 an dem Gabelgehäuse 71 geeignet fixiert ist, und einen inneren ringförmigen Rotor 78 auf, der mit geringem radialem Spalt dazwischen dem Stator 77 gegenüberliegend angeordnet und drehbar gelagert ist.

An einem in Figur 7 äußeren Ende ist der Rotor 78 mit einem ersten Wellenende 79 einer Ritzelwelle 81 drehfest verbunden. Die Ritzelwelle erstreckt sich ausgehend von ihrem ersten Wellenende 79 durch den Innenraum des Rotors 78 hindurch und über den Rotor 78 und den Stator 77 hinaus bis zu ihrem zweiten Wellenende 82 und ist in einem Zwischenabschnitt dazwischen über eine Lagereinrichtung 83, bspw. zwei im Abstand zueinander angeordnete Schrägkugellager oder dgl., gegen das Gabelgehäuse 71 geeignet abgestützt und drehbar gelagert.

Es sollte verstanden werden, dass jeder der dritten Torquemotoren 74a, 74b die gleiche Anordnung aus dem Stator 77, dem Rotor 78 und der Ritzelwelle 81 aufweist. Beide Ritzelwellen 81 weisen an ihrem zweiten Wellenende 82 eine Außenverzahnung 84 auf und stehen mit einer passenden Stirnverzahnung 86 eines gemeinsamen Abtriebszahnrades 87 kämmend in Eingriff. Die Ritzelwellen 81 und das Abtriebszahnrad 87 bilden das einstufige untersetzende Stirnradgetriebe 76, das vorzugsweise ein nicht selbsthemmendes, einstufiges Getriebe bildet und mechanisch oder elektronisch verspannt ist.

Das Abtriebszahnrad 87 ist mit der Spindeleinrichtung 18 drehfest gekoppelt. Die Spindeleinrichtung 18 weist eine Spindelaufnahme 88 mit einem Gehäuse 89 auf, das zwischen den Gabelarmen 68, 69 um die dritte Drehachse C schwenkbar aufgenommen ist. An dem über die Gabelarme 68, 69 vorragenden Ende der Spindelaufnahme 88 ragt die Frässpindel 11 mit ihrem Fräswerkzeug 91, das zur mechanischen Bearbeitung einer Werkstückoberfläche dient, aus dem Gehäuse 89 vor.

Weiterhin Bezug nehmend auf Figur 7 ist ersichtlich, dass das Gehäuse 89 der Spindelaufnahme 88 mit dem Abtriebszahnrad 87 bspw. verschraubt sein kann. Eine Axial-Radial-Lageranordnung 92 kann die Spindelaufnahme 88 gemeinsam mit dem Abtriebszahnrad 87 axial und radial gegen das Gabelgehäuse 71 abstützen und drehend lagern. Auf der gegenüberliegenden (Klemmungs-)Seite ist ein weiteres, nicht näher bezeichnetes Lager vorgesehen. Es sind unterschiedliche Lagerungsformen für die Spindelaufnahme 88 möglich.

Es kann ein drittes Messsystem 93 vorgesehen sein, um die Winkelposition und/oder Winkelgeschwindigkeit der Spindeleinrichtung 18 um die dritte Drehachse A im Betrieb zu messen. Hierzu kann an der Spindelaufnahme 88 eine Mitnahmewelle 94 angebracht sein, die von der Spindelaufnahme 88 aus in den Innenraum 73 des Gabelarms 69 vorragt und an ihrem freien Ende eine Maßverkörperung tragen kann, die von einem Sensor bzw. Messaufnehmer erfasst werden kann, der geeignet an dem Gabelgehäuse 89 angebracht ist. Die von dem Sensor erfassten Winkelmesssignale werden zu der Steuereinrichtung übermittelt und zur Positionierung der Spindeleinrichtung 18 um die A-Achse verwendet. Wie für die C-Drehachse können auch für die A-Achse Hohlring-Messsysteme oder Ähnliches verwendet werden.

Es kann eine Achsklemmanordnung 96 für die A-Achse vorgesehen sein, um die Spindeleinrichtung 18 während einer Werkstückbearbeitung in einer gewünschten Winkelposition um die A-Achse festzuklemmen bzw. zu fixieren, um eine Verdrehung der Spindeleinrichtung 18 um die A-Achse infolge von Reaktionskräften bei der Bearbeitung zu verhindern. Wenn vorzugsweise zwei Klemmungen, zu beiden Seiten der Spindeleinrichtung 18 eingesetzt werden, kann eine höhere Steifigkeit in der A-Achse im geklemmten Zustand erreicht werden.

Der Fräskopf 9 weist weitere Einrichtungen und Mittel auf, z.B. Versorgungsleitungen zur Zuführung von Kühlluft oder einer Kühlflüssigkeit für die Torquemotoren, zur Zuführung eines Schmiermittels und/oder zur Zuführung eines Kühlmediums, das das Fräswerkzeug 91 bei der Bearbeitung einer Werkstückoberfläche kühlt. Derartige Einrichtungen und Mittel sind in den Figuren zwecks besserer Übersichtlichkeit weggelassen und an sich für die Erfindung nicht wesentlich. Es ist jedoch zu bemerken, dass durch die kompakte und offene, gut zugängliche Bauform des Fräskopfes 9, die insbesondere durch die Ausgestaltung der Antriebseinrichtungen 19, 21 und 22 bedingt ist, eine bessere Unterbringung derartiger Mittel in einem sehr beschränkten Raum innerhalb des Tragarms 14, des ersten Kopfteils 16 und bspw. des Innenraums 72 der Gabel 67 ermöglicht wird.

Die insoweit beschriebene Fräsmaschine 1 mit dem erfindungsgemäßen Fräskopf 9 ist zur simultanen 6-Achsen-Bearbeitung von Werkstückoberflächen mit hoher Oberflächengüte eingerichtet und insbesondere zur Großteilebearbeitung in der Automobil-, Luft- und Raumfahrtindustrie geeignet. Sie arbeitet wie folgt:
Im Betrieb wird ein zu bearbeitendes Werkstück in dem Messraum 13 auf dem Messtisch 12 positioniert. Eine numerische Steuerung der Fräsmaschine 1 steuert die den linearen Achsen X, Y und Z zugeordneten Antriebe geeignet an, um den Fräskopf 9 in die jeweils zum Fräsen geeignete Position zu überführen. Die gesamte Maschinenstruktur mit den standfesten Seitenständern 2, 3, dem struktursteifen Portal 4, den Linearantrieben, etc. ist für hohe dynamische Steifigkeit ausgelegt. Es lassen sich somit sehr schnelle Vorschübe, hohe Achsbeschleunigungen von sogar mehr als 5 m/s² und schnelle Lastwechsel erreichen, ohne dass hierbei wesentliche Erschütterungen oder Schwingungen hervorgerufen werden.

Gleichzeitig mit der Steuerung der vorgenannten Linearantriebe aktiviert die Steuerung die Torquemotoren 27, 47a, 47b und/oder 74a, 74b, um eine Drehung des ersten Kopfteils 16 in Bezug auf den Tragarm 14 um die erste Drehachse C, eine Drehung des zweiten Kopfteils 17 in Bezug auf das erste Kopfteil 16 um die zweite Drehachse B und/oder eine Drehung der Spindeleinrichtung 18 in Bezug auf das zweite Kopfteil 17 um die dritte Drehachse A zu bewirken und damit eine präzise gesteuerte Positionierung der Frässpindel 11 zu erreichen.

Die in Bezug auf die C-Achse geneigte Schrägachse B ermöglicht in Kombination mit der Konstruktion des ersten und des zweiten Kopfteils 16, 17 relativ große A- und B-Achsschwenkbereiche. Der Neigungswinkel zwischen der B- und der C-Achse beträgt vorzugsweise 30° bis 60°, mehr bevorzugt 40° bis 50°. In speziellen Ausführungsformen beträgt er 45° oder 50°. Bei einem 45°-Neigungswinkel zwischen der B- und der C-Achse kann die (interpolierte, "orthogonale") räumliche B-Achse um bis zu +/- 45° oder sogar mehr geschwenkt werden. Der A-Achsschwenkbereich beträgt in dem dargestellten Beispiel etwa -90° bis +120° und kann je nach Konstruktion noch mehr betragen. Bei diesen Schwenkbereichen lassen sich sehr komplexe Oberflächen und Details mit sehr guten Qualitäten fräsen.

Bei dem erfindungsgemäßen Fräskopf ist die orthogonale B-Achse von herkömmlichen Dreiachs-Fräsköpfen bspw. der kardanischen Bauart durch die Schrägachse B ersetzt. Eine "orthogonale B-Achse" (räumliche B-Achse) kann wiederum durch die überlagerte Bewegung von zwei oder drei der Achsen A, B, C interpoliert bzw. realisiert werden. Umgekehrt ist es aber möglich, das durch die zwei orthogonalen Achsen A, C und die Schrägachse B gebildete Koordinatensystem als das Basissystem für die Bearbeitungsvorgänge zu verwenden und sämtliche erforderlichen Positionierungen der Drehachsen basierend auf diesem System zu berechnen.

Durch die Verwendung der drei Dreh- bzw. Schwenkachsen A, B, C, die alle unabhängig voneinander und simultan antreibbar sind, kann das Fräswerkzeug 91 auf direktem Wege in die nächst erforderliche Bearbeitungslage überführt werden. Die Bearbeitungsgeschwindigkeit kann deutlich erhöht und die gesamte Bearbeitungszeit reduziert werden. Ein Polstellenproblem wie beim klassischen Fräskopf mit A- und C-Drehachse existiert nicht. Außerdem ist es möglich, während des Bearbeitungsvorgangs eine elektronische Orientierungsfehlerkompensation durchzuführen. Mittels der drei Drehachsen A, B und C können während eines Fräsvorgangs Abweichungen zwischen der Ist- und der Solllage, die im Vorfeld gemessen worden sind, stets korrigiert werden. Dadurch können Anforderungen an die Genauigkeit bei der Herstellung und Montage von Bauteilen der Fräsmaschine 1 im Allgemeinen und des Fräskopfes 9 im Speziellen unter Aufrechterhaltung einer hohen Bearbeitungspräzision gesenkt werden. Kosten können deutlich reduziert werden.

Der erfindungsgemäße Fräskopf 9 ist z.B. zum Wälzfräsen von Taschen oder umlaufenden Konturen mit schrägen Wänden gut geeignet. Derartige Taschen oder dgl. können mit der erfindungsgemäßen Vertikal- oder Horizontal-Fräsmaschine 1 ohne Unterbrechung, ohne Umschwenken der C-Achse an jedem Eckpunkt um 90°, wie bei Zweiachs-Fräsköpfen, und ohne Zurückspulen, wenn die C-Achse ihre Endlage erreicht, gefräst werden. Dies kann allein durch entsprechende Ansteuerung der A- und B-Drehachsen erfolgen. Die C-Achse kann dabei während des gesamten Fräsvorgangs in einer Position festgesetzt bzw. geklemmt bleiben. Bedarfsweise kann aber die C-Achse zusätzlich für den Fräsvorgang verwendet werden.

Durch die Neigung der B-Achse und die spezielle konstruktive Gestaltung der Kopfteile 16, 17 können kastenförmige, ineinander verschachtelte Gehäuseteile herkömmlicher Dreiachs-Anordnungen vermieden werden. Es kann ein kompakter Fräskopf 9 mit geringer Störkontur geschaffen werden, der das Fräsen sehr feiner Konturen auf engem Raum ermöglicht. Gezielte Maßnahmen, wie eine spielfreie Verspannung der Getriebeeinrichtungen 48, 76, das Vorsehen von Torquemotoren 27, 47a, 47b und 74a, 74b für die Drehachsen, konstruktive Ausgestaltung der Elemente, präzise und spielfreie Führungen und Lagerungen, geringes Bauvolumen und Gewicht des Fräskopfes 9 etc., schaffen die Grundlage für eine hohe dynamische Steifigkeit und Bearbeitungsgenauigkeit bei hoher Sicherheit, Wirtschaftlichkeit und Langlebigkeit der Fräsmaschine 1.

Der erfindungsgemäße Fräskopf 9 bietet eine große Flexibilität bei der speziellen Konstruktion, die je nach Anwendung und Umgebungsbedingungen variieren kann.

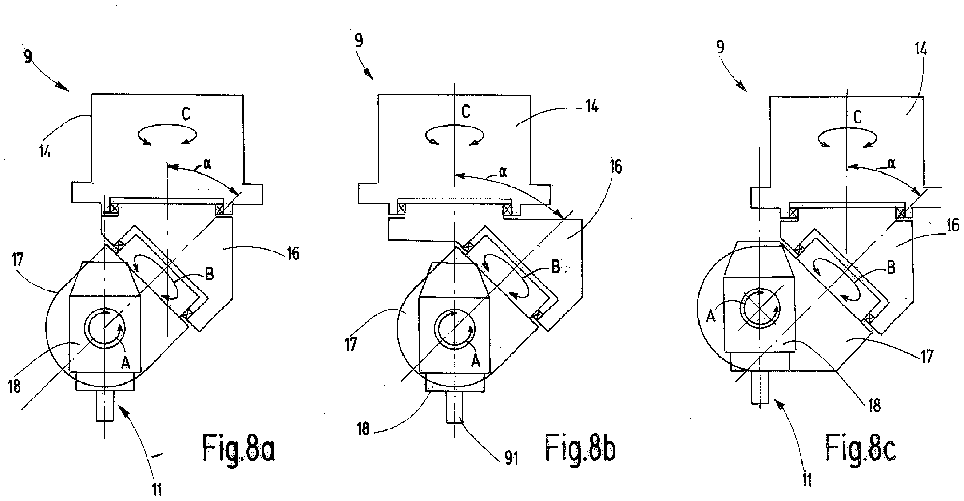

Figuren 8a bis 8c zeigen unterschiedliche konstruktive Varianten einer Werkzeugkopfeinheit in stark vereinfachten Prinzipdarstellungen. Die Figuren 8a und 8c zeigen konstruktive Varianten gemäß der beanspruchten Erfindung. Figur 8b zeigt eine konstruktive Variante, die nicht zu der beanspruchten Erfindung gehört.

Figur 8a zeigt eine Werkzeugkopfeinheit, die dem vorstehend beschriebenen Fräskopf 9 entspricht. Die durch den Tragarm 14 definierte erste Drehachse C und die durch das zweite Kopfteil 17 definierte dritte Drehachse A für die Spindeleinrichtung 18 sind orthogonal zueinander ausgerichtet, während die zweite Drehachse B für die relative Drehung zwischen dem ersten und dem zweiten Kopfteil 16, 17 zu der C-Achse schräg und zu der A-Drehachse orthogonal ausgerichtet ist. Dabei sind die erste und die dritte Achse C, A zueinander horizontal versetzt, während die zweite Achse B diese Achsen C, A schneidet. Durch den Achsversatz bzw. die Exzentrizität zwischen der A- und der C-Achse können kleine Hebelarme und somit günstige Kraftflüsse insbesondere an dem ersten Kopfteil 16 erhalten werden, was der Steifigkeit und Dynamik zu Gute kommt. Außerdem kann die Störkontur des Fräskopfes 9 optimiert werden.

Figur 8b zeigt eine nicht erfindungsgemäße Variante, bei der alle drei Achsen A, B und C einander in einem gemeinsamen Punkt schneiden. Auch die Spindelachse der Spindeleinrichtung 18 verläuft durch diesen Punkt, wenn die A- und die B-Achse sich in den in Figur 8b dargestellten Nullpositionen (A = 0°, B = 0°) befinden. Die Anordnung der Achsen A, B, C entspricht dann derjenigen von klassischen Dreiachs-Fräsköpfen bspw. mit kardanischem Aufbau.

Figur 8c zeigt eine weitere Variante gemäß der Erfindung, bei der die A-Drehachse sowohl zu der C-Drehachse als auch zu der B-Achse versetzt angeordnet ist. Wie ersehen werden kann, kann dadurch die Länge der Werkzeugkopfeinheit 9 gegenüber den anderen Varianten reduziert werden, was für viele Anwendungen von Vorteil sein kann.

In allen in den Figuren 8a-c gezeigten Varianten verlaufen die erste und die zweite Drehachse C, B (in deren Nullpositionen) und die Spindelachse alle in einer gemeinsamen Ebene. Prinzipiell ist es aber auch möglich, einen Achsversatz entlang der A-Achse vorzusehen, falls dies gewünscht oder erforderlich ist. Der Fräskopf 9 bietet viele Freiheitsgrade bei der Wahl der geeigneten Konstruktion.

Im Rahmen der Erfindung sind weitere zahlreiche Modifikationen und Variationen der vorstehend beschriebenen Ausführungsformen möglich. Bspw. kann der Fräskopf 9 in Horizontal-Werkzeugmaschinen auch längs einer horizontalen Z-Richtung verfahrbar sein. Ferner kann sich die Form der Kopfteile 16, 17 von den veranschaulichten Formen unterscheiden. Insbesondere kann die Gabel 67 auch nur einen einzigen Gabelarm 68 bzw. 69 enthalten, an dem die Spindeleinrichtung 18 drehbar gelagert ist. Die beschriebene Gabel 67 mit zwei Gabelarmen 68, 69 sorgt aber für eine bessere Abstützung und Lagerung der Spindeleinrichtung 18, eine höhere Steifigkeit und Bearbeitungsgenauigkeit. Das zweite Kopfteil 17 muss nicht gabelförmig sein.

Für die Antriebseinrichtungen 19, 21 und 22 sind unterschiedliche Ausgestaltungen möglich. Insbesondere sind für alle Drehachsen A, B und C bevorzugt spielfreie Antriebsarten verwendbar, wie z.B. Verspannantriebe mit mehreren Motoren bzw. Motor-Getriebe-Kombinationen, wobei die Getriebe ein- oder mehrstufig ausgeführt sein können, Verspannantriebe mit einem einzigen Motor, mechanisch vorgespannte Getriebe, z.B. mit Verspann- oder Beveloid-Zahnrädern, Schneckengetriebe oder dgl.

Außerdem können als Messsysteme 37, 63 und 93 beliebige heutzutage bekannte oder künftige entwickelte, mechanisch, optisch, magnetisch oder kapazitiv arbeitende Messsysteme verwendet werden. Die erforderlichen Winkelstellungen können auch indirekt aus der relativen Winkellage bspw. von den Motorwellen oder dgl. abgeleitet werden.

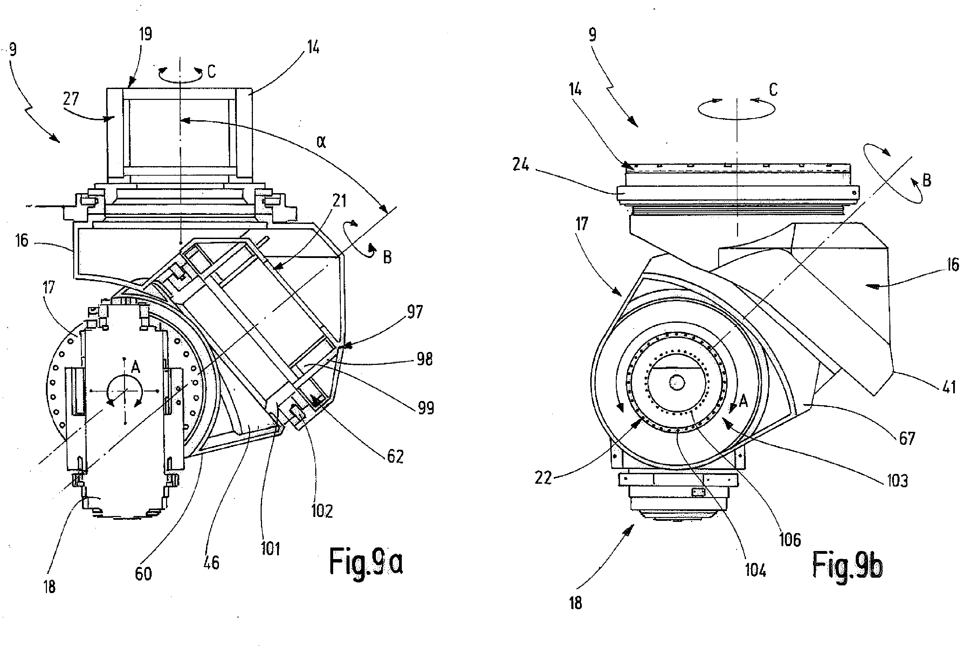

Weitere Ausführungsformen der vorliegenden Erfindung sind in stark vereinfachten Darstellungen in den Figuren 9a und 9b veranschaulicht. Soweit Übereinstimmung in Bau und/oder Funktion besteht, wird unter Verwendung gleicher Bezugszeichen auf die vorstehende Beschreibung verwiesen. Die in Figur 9a veranschaulichte Ausführungsform unterscheidet sich von derjenigen nach den Figuren 2-7 insbesondere dadurch, dass hier für die der zweiten Drehachse B zugeordnete Antriebseinrichtung 21 ein Torquemotor-Direktantrieb vorgesehen ist. Zu diesem gehört ein Torquemotor 97, die hier nur als Beispiel als Außenläufer mit einem an dem Winkelgehäuse 41 ortsfest fixierten inneren Statorring 99 und einem zu diesem konzentrischen äußeren Rotorring 98 mit Permanentmagneten ausgeführt ist, der mit einer hohlzylindrischen Motorwelle 101 drehfest verbunden ist. Die Motorwelle 101 ist in dem Winkelgehäuse 41 über geeignete Lagermittel 102 axial und radial abgestützt und drehbar gelagert. An dem von dem Torquemotor 97 abliegenden Ende der Motorwelle 101 ist die Basis 46 der Gabel 67 des zweiten Kopfteils 17 befestigt, um durch den Torquemotor 97 um die B-Achse gedreht zu werden.

Wie ersichtlich, ist hier die dritte Drehachse A zu der ersten C und der zweiten Drehachse B versetzt angeordnet, um eine möglichst kompakte Bauform in Längsrichtung der Werkzeugkopfeinheit 9 zu erhalten. Es sind auch eine Achsklemmeinheit 62 und ein Winkelmesssystem 63 für die B-Achse vorgesehen.

Die in Figur 9b veranschaulichte Ausführungsform unterscheidet sich von den vorstehend erläuterten Ausführungsformen insbesondere dadurch, dass hier für die der dritten Drehachse A zugeordnete dritte Antriebseinrichtung 22 ein Torquemotor-Direktantrieb vorgesehen ist. Dieser weist einen Torquemotor 103 auf, zu dem ein äußerer Statorring 104 und ein zu diesem konzentrischer Rotorring 106 gehören. Der Statorring 104 und der Rotorring 106 sind zu der A-Achse konzentrisch angeordnet, wobei der Rotorring 106 mit der Spindeleinrichtung 18, bspw. über eine hohle Abtriebswelle, drehfest verbunden ist. Folglich wird die Spindeleinrichtung 18 bei der Bearbeitung eines Werkstücks durch den Torquemotor 103 direkt drehend angetrieben. Lagermittel zur Lagerung des Rotorrings 106, eine oder mehrere, beidseitig angeordnete Klemmeinheiten zur A-Achsklemmung bei der Werkstückbearbeitung und ein Winkelmesssystem für die A-Achse sind in der Ausführungsform nach Figur 9b ebenfalls vorhanden, wenngleich sie der Übersichtlichkeit wegen nicht dargestellt sind.

Wie veranschaulicht, schneidet die Schrägachse B hier die A-Achse, um Hebelarme für den Kraftfluss in Bezug auf die A-Achse zu reduzieren, wobei ein Achsversatz zwischen der A- und B-Achse je nach Anwendung und Bedarf vorgesehen werden kann.

Im Übrigen können die Ausführungsformen gemäß den Figuren 9a und 9b miteinander kombiniert werden, um eine Werkzeugkopfeinheit 9 zu schaffen, bei der sämtliche Drehachsen A, B und C durch Torquemotor-Direktmotoren angetrieben sind. Dies ermöglicht höchste Drehmomente bei äußerst hoher Steifigkeit und Dynamik der Maschine. Zur weiteren Steigerung der Leistung der Wechselkopfeinheit 9 oder zur Reduzierung der radialen Abmessungen der Komponenten 14, 16 und 17 könnte für eine beliebige der Achsen A, B, C auch eine Tandemanordnung von zwei oder mehreren Torquemotoren vorgesehen sein, die gemeinsam bzw. parallel eine gemeinsame Motorwelle antreiben.

Es ist eine Dreiachs-Werkzeugkopfeinheit 1 für eine Werkzeugmaschinenspindel 90, insbesondere Dreiachs-Fräskopfeinheit, offenbart, die drei um unabhängige Achsen A, B, C relativ zueinander verdrehbare bzw. verschwenkbare Komponenten 16, 17, 18 aufweist. Ein erstes Kopfteil 16 ist an einem Tragarm 14 um eine erste Achse C in Bezug auf den Tragarm 14 drehbar gelagert. Ein zweites Kopfteil 17 ist an dem ersten Kopfteil 16 um eine zweite Achse B in Bezug auf das erste Kopfteil 16 drehbar gelagert. An dem zweiten Kopfteil 17 ist eine Spindeleinrichtung 18 um eine dritte Achse A in Bezug auf das zweite Kopfteil 17 drehbar gelagert. Die dritte Drehachse A ist zu der ersten und der zweiten Drehachse C, B orthogonal ausgerichtet, während die erste und die zweite Drehachse C, B um einen Winkel zwischen 30° und 60° zueinander geneigt sind. Jeder der drei Drehachsen C, B, A ist eine individuelle Antriebseinrichtung 19, 21, 22 zum Antrieb und zur Steuerung der Drehung der Komponente 16, 17, 18 um ihre jeweilige Achse C, B, A zugeordnet. Die Dreiachs-Werkzeugkopfeinheit 1 bietet große Achsschwenkbereiche bei geringer Störkontur und ermöglicht schnelle und präzise Positionierungen einer Werkzeugmaschinenspindel 90 in die erforderliche Bearbeitungsposition. Eine Werkzeugmaschine 1, insbesondere Fräsmaschine, mit einer derartigen Dreiachs-Werkzeugkopfeinheit 1 ist ebenfalls offenbart.

## Patentansprüche

1. Werkzeugkopfeinheit für spanabhebende Bearbeitung von Werkstücken, insbesondere Fräskopfeinheit für eine Fräsmaschinespindel,
mit einem Tragarm (14), der eine erste Achse (C) definiert,
mit einem an dem Tragarm (14) gelagerten ersten Kopfteil (16), das um die erste Achse (C) in Bezug auf den Tragarm (14) drehbar angeordnet ist und eine in Bezug auf die erste Achse (C) um einen von 0° und 90° verschiedenen Winkel geneigte zweite Achse (B) definiert;
mit einem an dem ersten Kopfteil (16) gelagerten zweiten Kopfteil (17), das um die zweite Achse (B) in Bezug auf das erste Kopfteil (16) drehbar angeordnet ist;
mit einer an dem zweiten Kopfteil (17) gelagerten Spindeleinrichtung (18), die um eine dritte Achse (A) in Bezug auf das zweite Kopfteil (17) drehbar angeordnet ist; und
mit der ersten, zweiten und dritten Achse (C, B, A) zugeordneten Antriebseinrichtungen (19, 21, 22) zum gesonderten Antrieb und zur Steuerung der Drehungen des ersten Kopfteils (16), des zweiten Kopfteils (17) und der Spindeleinrichtung (18) um die jeweilige erste, zweite bzw. dritte Achse (C, B, A) ;
wobei die erste Drehachse (C) und die dritte Drehachse (A) zueinander orthogonal ausgerichtet sind, die zweite Drehachse (B) zu der dritten Drehachse (A) orthogonal ausgerichtet ist und die dritte Drehachse (A) zu der ersten Drehachse (C) versetzt ist und
wobei die zweite Drehachse (B) zu der dritten Drehachse (A) versetzt ist oder die erste Drehachse (C) und die dritte Drehachse (A) schneidet.

2. Werkzeugkopfeinheit nach Anspruch 1, wobei die zweite Drehachse (B) die erste Drehachse (C) und die dritte Drehachse (A) schneidet.

3. Werkzeugkopfeinheit nach Anspruch 1, wobei die dritte Drehachse (A) zu der zweiten Drehachse (B) versetzt ist.

4. Werkzeugkopfeinheit nach einem beliebigen der vorhergehenden Ansprüche, wobei die erste, zweite und die Spindelachse (C, B, Spindelachse) in der Nullstellung aller Achsen in einer gemeinsamen Ebene verlaufen.

5. Werkzeugkopfeinheit nach einem beliebigen der vorhergehenden Ansprüche, wobei der Neigungswinkel (α) der zweiten Drehachse (B) in Bezug auf die erste Drehachse (C) im Bereich von 30° bis 60 °, vorzugsweise im Bereich von 40° bis 50° liegt, am meisten bevorzugt etwa 45° beträgt.

6. Werkzeugkopfeinheit nach einem beliebigen der vorhergehenden Ansprüche, wobei der Tragarm (14) Mittel (24, 26) zur Befestigung an einer Werkzeugmaschine (1), die erste Antriebseinrichtung (19) und eine von dieser drehend antreibbare hohlzylindrische Motorwelle (27) aufweist, die koaxial zu der ersten Drehachse (C) angeordnet und zur Befestigung des ersten Kopfteils (16) an dieser eingerichtet ist.

7. Werkzeugkopfeinheit nach Anspruch 6, wobei die erste Antriebseinrichtung (19) einen ersten Torquemotor (27) aufweist, der zum direkten Drehantrieb der Motorwelle (27) mit dieser gekoppelt ist.

8. Werkzeugkopfeinheit nach einem beliebigen der vorhergehenden Ansprüche, wobei das erste Kopfteil (16) ein gekröpftes Winkelgehäuse (41) mit einem ersten Ende (42), das im Wesentlichen zylindrisch ausgebildet und eingerichtet ist, um an dem Tragarm (14) in einer zu der ersten Drehachse (C) koaxialen Anordnung montiert zu sein, und einem zweiten Ende (43) aufweist, das eine zylindrische und zu der zweiten Achse (B) koaxiale Aufnahmeöffnung (44) für das zweite Kopfteil (17) definiert.

9. Werkzeugkopfeinheit nach Anspruch 8, wobei die zweite Antriebseinrichtung (22) wenigstens einen zweiten Torquemotor (47a, 47b; 97) und vorzugsweise eine untersetzende Zahnradgetriebeeinrichtung (48) aufweist, die zwischen dem zweiten Torquemotor (47a, 47b) und dem zweiten Kopfteil (17) antriebsmäßig eingefügt ist.

10. Werkzeugkopfeinheit nach Anspruch 9, wobei die untersetzende Zahnradgetriebeeinrichtung (48) ein nicht selbsthemmendes, vorzugsweise einstufiges Getriebe bildet und bevorzugterweise mechanisch oder elektronisch verspannt ist.

11. Werkzeugkopfeinheit nach einem beliebigen der vorhergehenden Ansprüche, wobei das zweite Kopfteil (17) als eine im Wesentlichen U-förmige Gabel (67) ausgebildet ist, die eine Basis (46) zur Befestigung der Gabel (67) an einem Abtriebsteil (59; 101) der zweiten Antriebseinrichtung (21) und von der Basis (46) frei vorragende Schenkel (68, 69) aufweist, die im Wesentlichen parallel, im Abstand zueinander verlaufen und Gabelarme (68, 69) bilden.

12. Werkzeugkopfeinheit nach Anspruch 11, wobei die Spindeleinrichtung (18) eine zwischen den Gabelarmen (68, 69) schwenkbar angeordnete Spindelaufnahme (88) aufweist, die zur Aufnahme einer Arbeitsspindel (90) eingerichtet ist, und wobei innerhalb der Spindelaufnahme (88) vorzugsweise eine durch einen eigenen Motor drehend angetriebene Arbeitsspindel (90) sicherbar oder gesichert ist.

13. Werkzeugkopfeinheit nach Anspruch 11 oder 12, wobei jeder Gabelarm (68, 69) ein einen Innenraum (72, 73) definierendes Gehäuse (71) aufweist und die dritte Antriebseinrichtung (22) vorzugsweise vollständig in dem Innenraum (73) eines einzelnen Gabelarms (69) untergebracht ist.

14. Werkzeugkopfeinheit nach einem beliebigen der vorhergehenden Ansprüche, wobei die dritte Antriebseinrichtung (22) wenigstens einen dritten Torquemotor (74a, 74b; 103) und vorzugsweise ein weiteres untersetzendes Zahnradgetriebe (76) aufweist, das zwischen dem dritten Torquemotor (74a, 74b) und der Spindeleinrichtung (18) antriebsmäßig eingefügt ist.

15. Werkzeugkopfeinheit nach Anspruch 14, wobei das weitere untersetzende Zahnradgetriebe (76) ein nicht selbsthemmendes, vorzugsweise einstufiges Getriebe bildet und bevorzugterweise mechanisch oder elektronisch verspannt ist.

16. Werkzeugkopfeinheit nach einem beliebigen der vorhergehenden Ansprüche, wobei die zweite und/oder die dritte Antriebseinrichtung (21, 22) einen zweiten bzw. dritten Torquemotor (97, 103) aufweist/aufweisen, der zum direkten Drehantrieb des zweiten Kopfteils (17) bzw. der Spindeleinrichtung (18) eingerichtet ist.

17. Werkzeugkopfeinheit nach einem beliebigen der vorhergehenden Ansprüche, wobei jeder Drehachse (C, B, A) ein Messsystem (37, 63, 93) zur Messung der relativen Winkelposition und/oder Winkelgeschwindigkeit eines Rotors in Bezug auf einen Stator der jeweiligen Antriebseinrichtung (19, 21, 22) zugeordnet ist.

18. Werkzeugmaschine, insbesondere Fräsmaschine, mit einem in einem dreidimensionalen Messraum (13) positionierbaren Tragbalken (8), der eine Werkzeugkopfeinheit (1), insbesondere Fräskopfeinheit, nach einem beliebigen der vorhergehenden Ansprüche aufweist.

## Claims

1. A tool head unit for machining workpieces, in particular a milling head unit for a milling machine spindle, comprising
a support arm (14), which defines a first axis (C);
a first head part (16) mounted on the support arm (14), the first head part (16) being rotatably arranged about the first axis (C) with respect to the support arm (14) and defining a second axis (B) inclined at an angle different from 0° and 90° with respect to the first axis (C);
a second head part (17) mounted on the first head part (16) and rotatably arranged about the second axis (B) with respect to the first head part (16);
a spindle device (18) mounted on the second head part (17) and rotatably arranged about a third axis (A) with respect to the second head part (17); and
drive devices (19, 21, 22) assigned with the first, second and third axis (C, B, A) for separately driving and controlling the rotations of the first head part (16), the second head part (17) and the spindle device (18) about the respective first, second and third axis (C, B, A);
wherein the first axis of rotation (C) and the third axis of rotation (A) are oriented orthogonally with respect to each other, the second axis of rotation (B) is oriented orthogonally with respect to the third axis of rotation (A) and the third axis of rotation (A) is offset from the first axis of rotation (C); and
wherein the second axis of rotation (B) is offset from the third axis of rotation (A) or intersects the first axis of rotation (C) and the third axis of rotation (A).

2. The tool head unit according to claim 1, wherein the second axis of rotation (B) intersects the first axis of rotation (C) and the third axis of rotation (A).

3. The tool head unit according to claim 1, wherein the third axis of rotation (A) is offset from the second axis of rotation (B).

4. The tool head unit according to anyone of the preceding claims, wherein first, second axes and the spindle axis (C, B, spindle axis) run in a common plane at the zero position of all axes.

5. The tool head unit according to anyone of the preceding claims, wherein the angle of inclination (α) of the second axis of rotation (B) with respect to the first axis of rotation (C) is in the range of 30° to 60°, preferably in the range of 40° to 50°, most preferably is about 45°.

6. The tool head unit according to anyone of the preceding claims, wherein the support arm (14) comprises means (24, 26) for attachment to a machine tool (1), the first drive device (19) and a hollow cylindrical motor shaft (27) rotationally driveable thereby, which is arranged coaxially with the first axis of rotation (C) and is configured for attachment of the first head part (16) thereto.

7. The tool head unit according to claim 6, wherein the first drive device (19) comprises a first torque motor (27) coupled thereto for direct rotary driving of the motor shaft (27).

8. The tool head unit according anyone of the preceding claims, wherein the first head part (16) comprises a cranked angled housing (41) with a first end which is formed substantially cylindrically and is configured to be mounted on the support arm (14) in a coaxial arrangement with the first axis of rotation (C) and a second end (43) which defines a receiving opening (44) for the second head part (17), which is cylindrical and coaxial with the second axis of rotation (B).

9. The tool head unit according to claim 8, wherein the second drive device (22) comprises at least a second torque motor (47a, 47b; 97) and preferably comprises a reduction gear transmission device (48) drivingly inserted between the second torque motor (47a, 47b) and the second head part (17).

10. The tool head unit according to claim 9, wherein the reduction gear transmission device (48) forms a non-self-locking, preferably one-stage gear mechanism and is preferably mechanically or electronically clamped.

11. The tool head unit according to anyone of the preceding claims, wherein the second head part (17) is formed as a substantially U-shaped fork (67) which comprises a base (46) for attaching the fork (67) to a driven part (59; 101) of the second drive device (21) and legs (68, 69) freely protruding from the base (46), running substantially parallel to and spaced from each other and forming fork arms (68, 69).

12. The tool head unit according to claim 11, wherein the spindle device (18) comprises a spindle receptacle (88) pivotally arranged between the fork arms (68, 69) and configured for receiving a work spindle (11), and wherein a work spindle (11), which is preferably rotatably driven by its own motor, is securable or secured within the spindle receptacle (88).

13. The tool head unit according to claim 11 or 12, wherein each fork arm (68, 69) comprises a housing (71) which defines an interior space (72, 73) and the third drive device (22) is preferably completely accommodated within the interior space (73) of a single fork arm (69).

14. The tool head unit according to anyone of the preceding claims, wherein the third drive device (22) comprises at least a third torque motor (74a, 74b; 103) and preferably comprises a further reduction gear transmission (76) drivingly inserted between the third torque motor (74a, 74b) and the spindle device (18).

15. The tool head unit according to claim 14, wherein the further reduction gear transmission (76) forms a non-self-locking, preferably one-stage gear mechanism and is preferably mechanically or electronically clamped.

16. The tool head unit according to anyone of the preceding claims, wherein the second and/or the third drive device (21, 22) comprises/comprise a second and third torque motor (97, 103), respectively, which is arranged for direct rotary driving of the second head part (17) and the spindle device (18), respectively.

17. The tool head unit according to anyone of the preceding claims, wherein each axis of rotation (C, B, A) has a measuring system (37, 63, 93) assigned thereto for measuring the relative angular position and/or angular velocity of a rotor with respect to a stator of the respective drive device (19, 21, 22).

18. A machine tool, in particular a milling machine (1), having a support beam (8) which is positionable in a three-dimensional measuring space (13) and comprises a tool head unit, in particular a milling head unit (9), according to anyone of the preceding claims.

## Revendications

1. Unité de tête d'outil destinée à l'usinage par enlèvement de copeaux, en particulier unité de tête de fraisage destinée à une broche de fraiseuse,
comprenant un bras support (14) qui définit un premier axe (C),
comprenant un premier élément de tête (16) qui est monté sur le bras support (14) et est disposé avec possibilité de rotation autour du premier axe (C) par rapport au bras support (14) et définit un deuxième axe (B) qui est incliné par rapport au premier axe (C) sous un angle différent de 0° et 90° ;
comprenant un deuxième élément de tête (17) qui est monté sur le premier élément de tête (16) et est disposé avec possibilité de rotation autour du deuxième axe (B) par rapport au premier élément de tête (16) ;
comprenant un dispositif de broche (18) qui est monté sur le deuxième élément de tête (17) et est disposé avec possibilité de rotation autour d'un troisième axe (A) par rapport au deuxième élément de tête (17) ; et
comprenant des dispositifs d'entraînement (19, 21, 22) qui sont associés aux premier, deuxième et troisièmes axes (C, B, A) et sont destinés à l'entraînement séparé et à la commande des rotations du premier élément de tête (16), du deuxième élément de tête (17) et du dispositif de broche (18), respectivement autour du premier, deuxième et troisième axe (C, B, A) ;
dans laquelle le premier axe de rotation (C) et le troisième axe de rotation (A) sont orientés de façon orthogonale l'un par rapport à l'autre, le deuxième axe de rotation (B) est orienté de façon orthogonale par rapport au troisième axe de rotation (A), et le troisième axe de rotation (A) est décalé par rapport au premier axe de rotation (C), et
dans laquelle le deuxième axe de rotation (B) est décalé par rapport au troisième axe de rotation (A) ou coupe le premier axe de rotation (C) et le troisième axe de rotation (A).

2. Unité de tête d'outil selon la revendication 1, dans laquelle le deuxième axe de rotation (B) coupe le premier axe de rotation (C) et le troisième axe de rotation (A).

3. Unité de tête d'outil selon la revendication 1, dans laquelle le deuxième axe de rotation (B) est décalé par rapport au deuxième axe de rotation (B).

4. Unité de tête d'outil selon l'une quelconque des revendications précédentes, dans laquelle, dans la position zéro de tous les axes, le premier axe, le deuxième axe et l'axe de broche (C, B, axe de broche) s'étendent dans un plan commun.

5. Unité de tête d'outil selon l'une quelconque des revendications précédentes, dans laquelle l'angle d'inclinaison (α) du deuxième axe de rotation (B) par rapport au premier axe de rotation (C) est compris dans la plage allant de 30° à 60°, de préférence dans la plage allant de 40° à 50°, et est de manière particulièrement avantageuse d'environ 45°.

6. Unité de tête d'outil selon l'une quelconque des revendications précédentes, dans laquelle le bras support (14) présente des moyens (24, 26) de fixation à une machine-outil (1), le premier dispositif d'entraînement (19) et un arbre de moteur (27) cylindrique creux qui peut être entraîné en rotation par celui-ci, est disposé de manière coaxiale avec le premier axe de rotation (C) et est conçu pour une fixation du premier élément de tête (16) à celui-ci.

7. Unité de tête d'outil selon la revendication 6, dans laquelle le premier dispositif d'entraînement (19) présente un premier moteur à couple (27) qui est couplé à l'arbre de moteur (27) en vue de l'entraînement en rotation direct de celui-ci.

8. Unité de tête d'outil selon l'une quelconque des revendications précédentes, dans laquelle le premier élément de tête (16) présente un boîtier en angle (41) coudé, comprenant une première extrémité (42), qui est réalisée sensiblement sous une forme cylindrique et est conçue pour être montée sur le bras support (14), dans une disposition coaxiale avec le premier axe de rotation (C), et une deuxième extrémité (43) qui définit une ouverture de réception (44) cylindrique et coaxiale avec le deuxième axe (B), pour accueillir le deuxième élément de tête (17).

9. Unité de tête d'outil selon la revendication 8, dans laquelle le deuxième dispositif d'entraînement (22) présente au moins un deuxième moteur à couple (47a, 47b ; 97) et de préférence un dispositif de transmission à engrenage (48) réducteur qui est intercalé entre le deuxième moteur à couple (47a, 47b) et le deuxième élément de tête (17).

10. Unité de tête d'outil selon la revendication 9, dans laquelle le dispositif de transmission à engrenage (48) réducteur constitue une transmission, de préférence à un étage, qui n'est pas autobloquante, et est mis sous précontrainte de préférence par voie mécanique ou électronique.

11. Unité de tête d'outil selon l'une quelconque des revendications précédentes, dans laquelle le deuxième élément de tête (17) est réalisé sous la forme d'une fourche (67) sensiblement en forme de U, qui présente une base (46), destinée à la fixation de la fourche (67) à un élément de sortie (59 ; 101) du deuxième dispositif d'entraînement (22), et des branches (68, 69) qui font saillie librement à partir de la base (46) et s'étendent de manière sensiblement parallèle l'une à l'autre et à distance l'une de l'autre et constituent des bras de fourche (68, 69).

12. Unité de tête d'outil selon la revendication 11, dans laquelle le dispositif de broche (18) présente un logement de broche (88) qui est disposé avec possibilité de pivotement entre les bras de fourche (68, 69) et est conçu pour accueillir une broche de travail (90), et dans laquelle une broche de travail (90), entraînée en rotation de préférence par son propre moteur, peut être bloquée ou est bloquée dans le logement de broche (88).

13. Unité de tête d'outil selon la revendication 11 ou 12, dans laquelle chaque bras de fourche (68, 69) présente un boîtier (71) définissant un espace interne (72, 73), et le troisième dispositif d'entraînement (22) est de préférence logé complètement dans l'espace interne (73) d'un bras de fourche (69) individuel.

14. Unité de tête d'outil selon l'une quelconque des revendications précédentes, dans laquelle le troisième dispositif d'entraînement (22) présente au moins un troisième moteur à couple (74a, 74b ; 103) et de préférence une transmission à engrenage (76) réducteur supplémentaire, qui est intercalée du point de vue de l'entraînement entre le troisième moteur à couple (74a, 74b) et le dispositif de broche (18).

15. Unité de tête d'outil selon la revendication 14, dans laquelle la transmission à engrenage (76) réducteur supplémentaire constitue une transmission non autobloquante, de préférence à un étage, et est de préférence mise sous précontrainte par voie mécanique ou électronique.

16. Unité de tête d'outil selon l'une quelconque des revendications précédentes, dans laquelle le deuxième et/ou le troisième dispositif d'entraînement (21, 22) présente(nt) un deuxième et/ou un troisième moteur à couple (97, 103) qui est conçu pour l'entraînement en rotation direct du deuxième élément de tête (17) ou du dispositif de broche (18).

17. Unité de tête d'outil selon l'une quelconque des revendications précédentes, dans laquelle est associé à chaque axe de rotation (C, B, A), un système de mesure (37, 63, 93) destiné à mesurer la position angulaire et/ou la vitesse angulaire relative d'un rotor par rapport à un stator du dispositif d'entraînement (19, 21, 22) respectif.

18. Machine-outil, en particulier fraiseuse, comprenant une poutre de support (8) qui peut être positionnée dans un espace de mesure (13) tridimensionnel et présente une unité de tête d'outil (1), en particulier une unité de tête de fraisage, selon l'une quelconque des revendications précédentes.
